# EUROPÄISCHE PATENTSCHRIFT

(11) **EP 4 357 987 B1**
(45) Veröffentlichungstag und Bekanntmachung des Hinweises auf die Patenterteilung: **30.04.2025**
(21) Anmeldenummer: 23203291.2
(22) Anmeldetag: 12.10.2023
(51) Int. Cl.: G06Q 10/02, G06Q 10/083

(54) **BUCHUNGSSYSTEM FÜR EIN GÜTERTRANSPORTVERFAHREN, GÜTERTRANSPORTVORRICHTUNG MIT EINEM DERARTIGEN BUCHUNGSSYSTEM UND GÜTERTRANSPORTVERFAHREN**
BOOKING SYSTEM FOR A GOODS TRANSPORT METHOD, GOODS TRANSPORT DEVICE HAVING SUCH A BOOKING SYSTEM, AND GOODS TRANSPORT METHOD
SYSTÈME DE RÉSERVATION POUR UN PROCÉDÉ DE TRANSPORT DE MARCHANDISES, DISPOSITIF DE TRANSPORT DE MARCHANDISES DOTÉ D'UN TEL SYSTÈME DE RÉSERVATION ET PROCÉDÉ DE TRANSPORT DE MARCHANDISES

(30) Priorität: 19.10.2022 DE 102022211076
(43) Veröffentlichungstag der Anmeldung: 24.04.2024
(73) Patentinhaber: CargoBeamer AG, 04103 Leipzig (DE)
(72) Erfinder: Simin, Dmitrij, 04103 Leipzig (DE); Weidemann, Hans-Jürgen, 04103 Leipzig (DE)
(74) Vertreter: Dr. Solf & Zapf Patent- und Rechtsanwalts PartG mbB

(56) Entgegenhaltungen:
- DE-A1- 102020 005 617
- DE-B9- 102014 013 778
- US-A1- 2002 123 911
- US-A1- 2014 143 169

## Beschreibung

Die Erfindung betrifft ein Buchungssystem für ein Gütertransportverfahren zum Schienentransport von Stückgütern, eine Gütertransportvorrichtung mit einem derartigen Buchungssystem und ein derartiges Gütertransportverfahren. Stückgut bezeichnet in der Logistik jedes Transportgut, das sich einzeln am Stück transportieren lässt. Bei Stückgut handelt es sich unter anderem um ein Gebinde, beispielsweise Kisten oder Gitterboxen, oder beladene Paletten, Maschinen- oder Anlagenteile, Kabel-, Papier- oder Blechrollen, Packstücke und Fässer. Kein Stückgut ist beispielsweise Flüssiggut oder sind Gase, die ohne eigenen Behälter in die Transportfahrzeuge gepumpt werden. Sand, Kohle, Getreide und vergleichbare Feststoffe sind Schütt- oder Sauggut, sofern sie nicht verpackt sind.

Aus der US 2002/0123911 A1 ist eine Plattform für Buchungsanfragen zum Transport von Gütern bekannt.

Aus der DE 10 2009 012 159 A1 ist eine Güterumschlagvorrichtung für den kombinierten Güterverkehr für eine Terminal- bzw. Bahnsteigabfertigung zum Umschlagen bzw. Versetzen von Gütern wie Containern, Sattelschlepperaufliegern, Lkw-Anhängern, Hängern von Gliederzügen, normalen intermodularen Ladeeinheiten (ISO, Typ C) oder dergleichen von der Straße zur Schiene und umgekehrt bekannt. Das Umschlagen bzw. Versetzen erfolgt dabei durch horizontale schienengleiche Querverladung von Wechseltragelementen bzw. Waggonaufsätzen mittels Quertransporteinrichtungen.

Schienengleich meint, dass keine besondere Bahnsteighöhe erforderlich ist bzw. dass die Umschlagfläche des Terminals bzw. Bahnsteigs das gleiche oder nahezu das gleiche Arbeitsniveau hat wie die Schienenstränge der Gleisanlage oder die Achshöhe der Waggons.

Die Güterumschlagvorrichtung der DE 10 2009 012 159 A1 weist eine Gleisanlage mit zwei Gleissträngen, sowie eine neben der Gleisanlage und parallel zu dieser angeordnete etwa schienengleiche Verladebahn auf. Des Weiteren weist die Güterumschlagvorrichtung mehrere Shuttlebalken für den Quertransport der Wechseltragelemente von einem Schienenwaggon auf die Verladebahn oder umgekehrt auf. Die Shuttlebalken weisen jeweils Hubeinrichtungen auf und sind auf unterflur in Querrillen der Verladebahn angeordneten Tragschienenelement in Querrichtung hin- und her verfahrbar. Auf den wannenförmigen Wechseltragelementen ist das Ladegut abgesetzt und gelagert. Die Wechseltragelemente sind dabei auf den beiden Seitenwänden des Schienenwagons gelagert. Zum Entladen der Schienenwaggons werden die Shuttlebalken unter den Schienenwaggon gefahren, das Wechseltragelement mittels der Hubeinrichtungen angehoben und die Waggonseitenwände nach außen zur Seite weggeklappt. Die Waggonseitenwände werden dabei in eine zwischen den Tragschienen vorhandene Lücke verschwenkt, so dass sie von den die Wechseltragelemente tragenden Shuttlebalken überfahren werden können. Die Wechseltragelemente werden dann durch Absenken auf der Verladebahn abgesenkt.

Die Güterumschlagvorrichtung der DE 10 2009 012 159 A1 hat sich bewährt für beispielsweise Container, Sattelauflieger und Lkw-Anhänger.

Aus der DE 10 2014 013 778 A1 geht ein Waggonaufsatz hervor, der für das in der in der DE 10 2009 012 159 A1 beschriebene Güterumschlagverfahren verwendet werden kann. Der Waggonaufsatz ist als gedeckter Waggonaufsatz ausgebildet und weist eine Aufsatzbodenwandung, zwei Aufsatzseitenabdeckungen, zwei Aufsatzstirnwandungen und ein Aufsatzdach auf, wobei die Aufsatzbodenwand, die Aufsatzseitenabdeckungen, die Aufsatzstirnwandungen und das Aufsatzdach einen Waggoninnenraum begrenzen. Der Waggonaufsatz weist außerdem zumindest eine vertikale, zur Waggonlängsrichtung senkrechte, Zwischenwand und zumindest einen horizontalen Zwischenboden auf, welche den Waggoninnenraum in mehrere, bevorzugt quaderförmige, Abteile aufteilen. Die Abteile dienen zur Aufnahme der zu transportierenden Stückgüter.

Die DE 10 2014 013 778 A1 offenbart auch eine Güterumschlagvorrichtung mit Güterwaggons mit einem derartigen Waggonaufsatz.

Aufgabe der vorliegenden Erfindung ist die Bereitstellung eines Gütertransportverfahrens zum effizienten und kostengünstigen Schienentransport von Stückgütern und einer Gütertransportvorrichtung dafür. Zudem soll ein Mittel zur Ermöglichung des effizienten und kostengünstigen Schienentransports bereitgestellt werden.

Diese Aufgabe wird durch ein Buchungssystem gemäß Anspruch 1, eine Gütertransportvorrichtung gemäß Anspruch 7 und ein Gütertransportverfahren gemäß Anspruch 14 gelöst. Vorteilhafte Weiterbildungen der Erfindung sind in den sich jeweils anschließenden Unteransprüchen gekennzeichnet.

Anhand der Zeichnung wird die Erfindung im Folgenden beispielhaft näher erläutert. Es zeigen:
- Figur 1:: Eine perspektivische, schematische Ansicht eines erfindungsgemäß verwendeten Güterwaggons mit Waggonaufsatz
- Figur 2:: Eine perspektivische, schematische Ansicht eines Abschnitts einer erfindungsgemäßen Güterumschlagvorrichtung mit einem Güterwaggon und abgeladenem Waggonaufsatz
- Figur 3:: Eine perspektivische, schematische Ansicht eines Abschnitts einer erfindungsgemäßen Güterumschlagvorrichtung mit einem abgeladenen Waggonaufsatz, einem Regalbediengerät und einem Hochregallager
- Figur 4:: Eine weitere perspektivische, schematische Ansicht der Güterumschlagvorrichtung gemäß Figur 3
- Figur 5:: Eine perspektivische, schematische Ansicht eines auf Untersätzen verfahrbaren Waggonaufsatzes
- Figur 6:: Eine perspektivische, schematische Ansicht des erfindungsgemäßen Waggonaufsatzes mit teilweise geöffneten, hoch gefalteten Waggonaufsatzseitenabdeckungen
- Figur 7:: Eine perspektivische, schematische Ansicht eines Shuttlebalkens
- Figur 8:: Eine Seitenansicht des Waggonaufsatzes
- Figur 9:: Schematisch eine erfindungsgemäße Gütertransportvorrichtung
- Figur 10:: Schematisch ein möglicher Ablauf des erfindungsgemäßen Gütertransportverfahrens

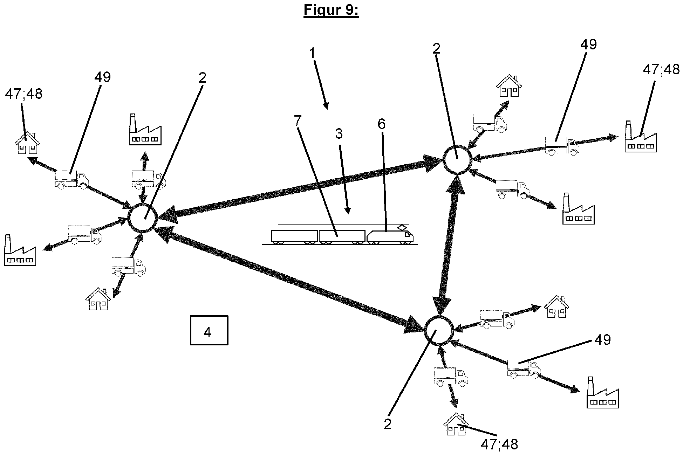

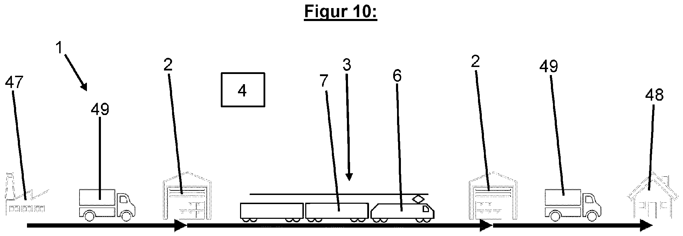

Die erfindungsgemäße Gütertransportvorrichtung 1 (Fig. 9;10) weist mehrere Güterumschlagvorrichtungen 2, mehrere Güterzüge 3 sowie erfindungsgemäß ein computergesteuertes Buchungssystem 4 auf.

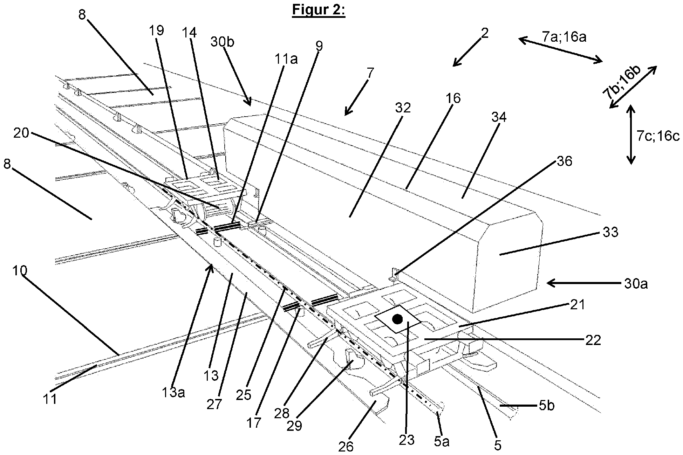

Eine Güterumschlagvorrichtung 2 (Fig. 2-4;9;10) dient zum Be- und Entladen der Güterzüge 3, insbesondere zum Umschlagen von Gütern von der Straße, von Fabriken oder Herstellwerken zur Schiene und umgekehrt, wobei das Umschlagen vorzugsweise mittels schienengleicher Querverladung erfolgt.

Die Güterumschlagvorrichtung 2 kann dabei beispielsweise in einem Güterbahnhof, einem Werk oder einer Fabrik oder einem Logistik- oder Güterverteilzentrum oder dergleichen angeordnet sein.

Die Güterumschlagvorrichtung 2 weist zumindest eine Eisenbahnschiene bzw. Gleisanlage 5 mit zwei zueinander parallelen Schienensträngen bzw. Gleissträngen 5a;5b auf, auf denen die Güterzüge 3 mit Lok 6 und daran hängenden Schienenwaggons bzw. Güterwaggons 7 verfahrbar gelagert sind. Im Rahmen der Erfindung handelt es sich bei einem Güterzug 3 um einen Zug, der mindestens einen Güterwaggon 7 aufweist.

Insbesondere beidseits neben und außerhalb der Gleisanlage 5 ist jeweils eine in etwa schienengleiche Verladebahn 8 vorgesehen. Schienengleich meint, dass die Bahnoberfläche der Verladebahn 8 der Höhe der Schienenoberkanten entspricht oder lediglich geringfügig, z.B. um 10 bis 50 cm höher ist. Im Gegensatz dazu wird beim Kranen die Ladung um ca. 5 m angehoben.

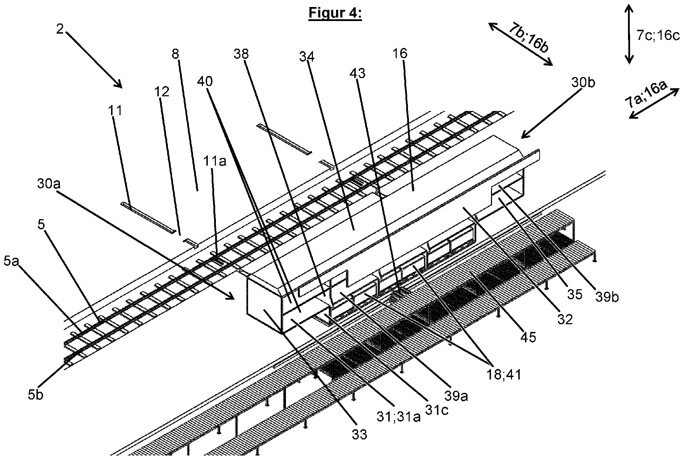

Die Güterumschlagvorrichtung 2 weist außerdem vorzugsweise zumindest ein Quertransportmittel, insbesondere einen Shuttlebalken 9, auf, der quer, also senkrecht, zu den Gleissträngen 5a;5b unterflur in Querrillen 10 der Verladebahn 8 verfahrbar ist. Dazu sind in den Querrillen 10 Förderbahnen 11 vorhanden, auf denen die Shuttlebalken 9 quer zu den Gleissträngen 5a;5b verfahrbar sind, z.B. gleit- oder rollengelagert sind. Bei den Förderbahnen 11 kann es sich in an sich bekannter Weise um Tragschienen (gemäß WO 2007/104721 A1) handeln, auf denen die Shuttlebalken 9 quer zu den Gleissträngen 5a;5b verfahrbar sind, z.B. gleit- oder mit ihren Transportrollen rollengelagert sind. Alternativ dazu weisen die Förderbahnen 11 selbst ortsfeste Transportrollen auf, auf denen die Shuttlebalken 9 rollengelagert sind (gemäß DE 10 2009 012 159 A1). Bevorzugt sind für jeden Güterwaggon 7 jeweils zwei Shuttlebalken 9 und vier Förderbahnen 11, nämlich je zwei auf jeder Seite der Gleisanlage 5, vorhanden. Die Förderbahnen 11 enden jeweils vor den Gleissträngen 5a;5b. Zwischen den beiden Gleissträngen 5a;5b sind aber Förderbahnenstücke 11a vorhanden, die in Fortsetzung der Förderbahnen 11 angeordnet sind, so dass die Shuttlebalken 9 von den Förderbahnen 11 auf die Förderbahnenstücke 11a verfahren können und umgekehrt. Dadurch können die Shuttlebalken 9 in an sich bekannter Weise unter einen Güterwaggon 7 fahren, worauf weiter unten näher eingegangen wird. Vor den Gleissträngen 5a;5b weisen die Förderbahnen 11 jeweils eine Lücke 12 (Fig. 4) auf, in die abgeklappte Waggonseitenwände 13 eines Waggonuntergestells 14 der Güterwaggons 7 zu liegen kommen, worauf ebenfalls weiter unten näher eingegangen wird.

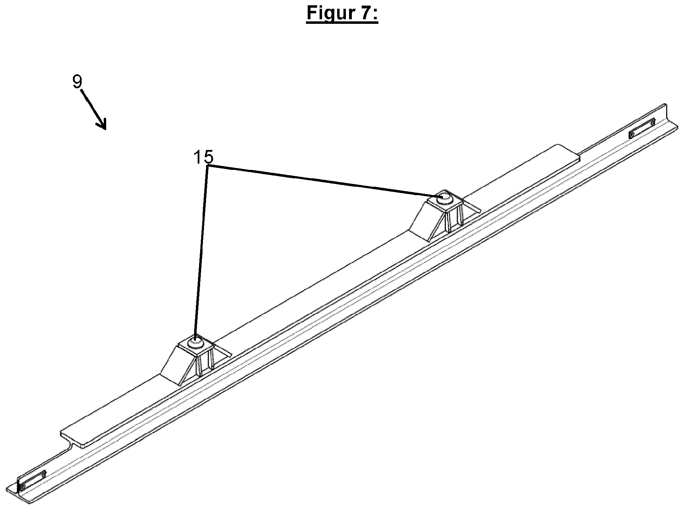

Die langgestreckt ausgebildeten Shuttlebalken 9 (Fig. 2;3;7) weisen in an sich bekannter Weise oberseitig Balkenhubeinrichtungen 15 auf, die zum Anheben eines erfindungsgemäßen Waggonaufsatzes 16 von der Verladebahn 8 und Absetzen auf der Verladebahn 8 dienen. Darauf wird ebenfalls weiter unten näher eingegangen.

Die Güterumschlagvorrichtung 2 weist außerdem mehrere, bevorzugt ortsfeste, Hubeinrichtungen 17 zum Anheben eines Waggonaufsatzes 16 von dem Waggonuntergestell 14 bzw. von den Shuttlebalken 9 und Absetzen auf dem Waggonuntergestell 14 bzw. auf den Shuttlebalken 9 auf. Die Hubeinrichtungen 17 sind vorzugsweise jeweils beidseits, jeweils verladebahnseitig, direkt neben Gleissträngen 5a;5b angeordnet. Die Hubeinrichtungen 17 sind somit nicht zwischen den beiden Gleissträngen 5a;5b, sondern außerhalb dieser angeordnet, aber vorzugsweise im Gleisbett.

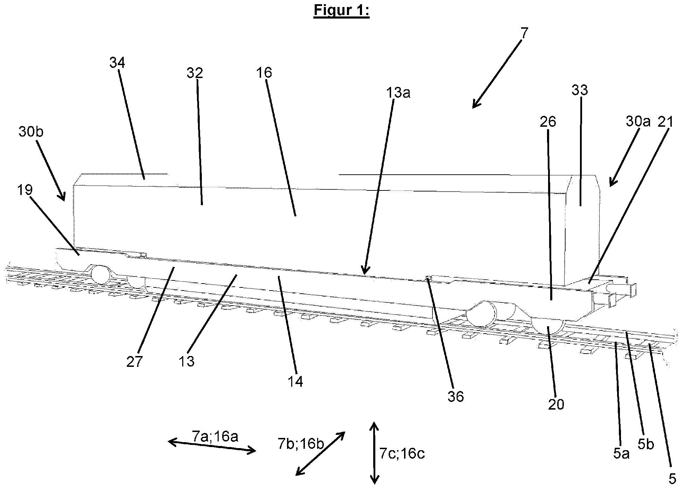

Bei einem Güterwaggon 7 (Fig. 1;2;9;10) handelt es sich gemäß einer bevorzugten Ausführungsform um einen Flachwagen mit gedecktem bzw. geschlossenem Waggonaufsatz 16.

Gemäß dem internationalen Eisenbahnverband UIC wird unter anderem unterschieden zwischen offenen Güterwaggons ohne Dach in Regelbauart (UIC-Gattung **E)** und Sonderbauart (UIC-Gattung **F)** und gedeckten Güterwaggons mit festem Dach in Regelbauart (UIC-Gattung **G)** und Sonderbauart (UIC-Gattung **H)** Eine weitere Waggonbauart sind Flachwagen, wiederum unter anderem unterteilt in Flachwagen mit Drehgestellen in Regelbauart (UIC-Gattung **R)** oder in Sonderbauart (UIC-Gattung **S)** Bei dem erfindungsgemäßen Güterwaggon 7 handelt es sich somit vorzugsweise um einen Güterwaggon 7 der UIC-Gattung **S.**

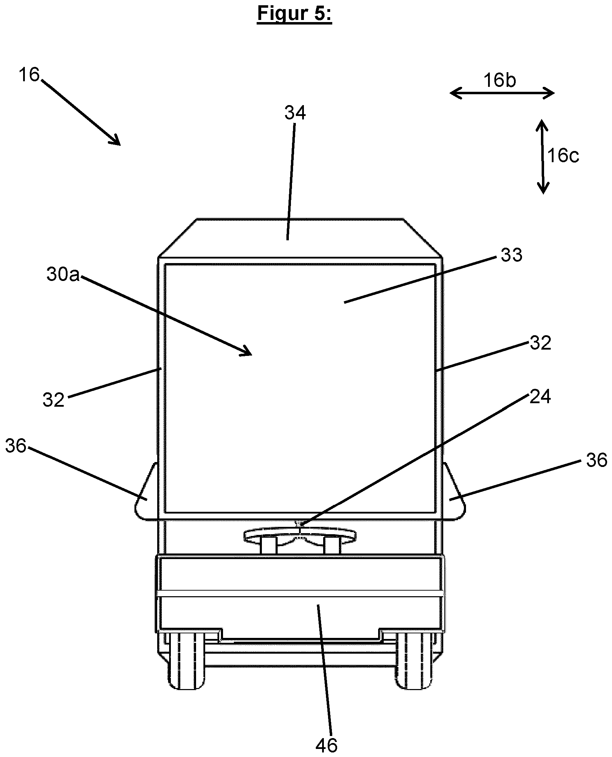

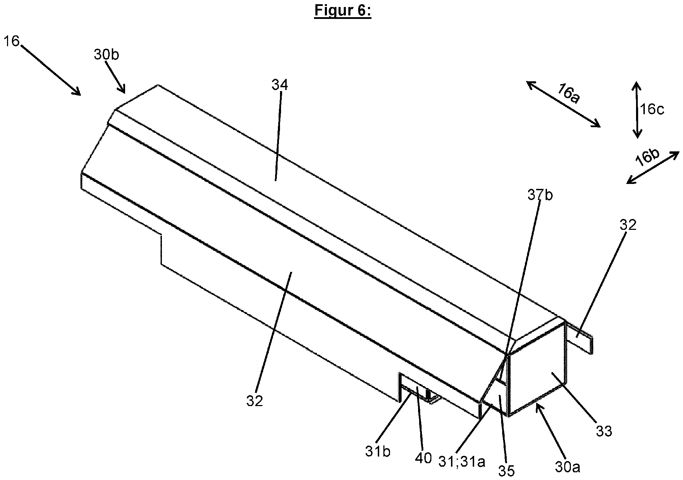

Ein Güterwaggon 7 (Fig. 1;2;9;10) weist jeweils das Waggonuntergestell 14 und den darauf aufgesetzten, insbesondere eingehängten, erfindungsgemäßen Waggonaufsatz 16 (Fig. 1-6;8) auf, der die zu transportierenden Stückgüter 18 aufnimmt. Zudem weist der Güterwaggon 7 eine horizontale, sich parallel zu den Gleissträngen 5a;b erstreckende Waggonlängsrichtung 7a und eine dazu senkrechte, horizontale Waggonquerrichtung 7b, sowie eine vertikale Waggonhöhenrichtung 7c auf.

Das Waggonuntergestell 14 weist in an sich bekannter Weise einen Waggonrahmen 19 sowie zwei, insbesondere zweiachsige, in Waggonlängsrichtung 7a voneinander beabstandete Drehgestelle 20 zum Verfahren des Güterwaggons 7 auf der Gleisanlage 5 auf. Anstelle der Drehgestelle 20 können auch Einzelachsen (nicht dargestellt) vorhanden sein.

Der Waggonrahmen 19 weist zwei voneinander in Waggonlängsrichtung 7a beabstandete Vorbauten bzw. Waggonkopfstücke 21 auf, die jeweils stirnseitig bzw. endseitig, des Waggonuntergestells 14 angeordnet sind. Die beiden Waggonkopfstücke 21 lagern jeweils in an sich bekannter Weise auf einem der beiden Drehgestelle 20. Dabei sind die beiden Waggonkopfstücke 21 jeweils fest mit dem jeweiligen Drehgestell 20 verbunden.

Des Weiteren weisen die beiden Waggonkopfstücke 21 vorzugsweise jeweils ein, insbesondere quaderförmiges, Kopfstückrahmengestell 22 auf.

Des Weiteren befindet sich zudem vorzugsweise oberseitig und zentral auf zumindest einem der beiden Waggonkopfstücke 21 eine an sich bekannte Königszapfenarretierungseinrichtung 23 zur Aufnahme und Verriegelung bzw. Arretierung eines Königszapfens 24 des Waggonaufsatzes 16 in horizontaler und/oder vertikaler Richtung relativ zum Waggonuntergestell 14. Die Königszapfenarretierungseinrichtung 23 ist vorzugsweise gemäß der DE 10 2009 015 775 A1 ausgebildet.

Der Waggonrahmen 19 weist zudem die beiden Waggonseitenwände 13 auf. Diese verbinden die beiden Waggonkopfstücke 21 starr miteinander, also zueinander unverschieblich und unverdrehbar. Dabei sind die Waggonseitenwände 13 jeweils um eine zur Waggonlängsrichtung 7a parallele Seitenwandschwenkachse 25 an den Waggonkopfstücken 21 gelagert.

Die beiden Waggonseitenwände 13 weisen jeweils eine Wandoberkante 13a auf.

Außerdem weisen die beiden Waggonseitenwände 13 eines Güterwaggons 7 jeweils zwei endseitige Auflagerstege 26 und einen dazwischen angeordneten, mittigen Lastaufnahmesteg 27 auf. Der Lastaufnahmesteg 27 dient zur Aufnahme bzw. Lagerung des Waggonaufsatzes 16.

Die beiden Auflagerstege 26 dienen zur schwenkbaren Lagerung der Waggonseitenwände 13 an den Waggonkopfstücken 21, insbesondere den Kopfstückrahmengestellen 22, um die jeweilige Seitenwandschwenkachse 25. Dazu weisen die Waggonseitenwände 13, insbesondere jeweils vier, Lagerarme 28 auf, die jeweils einendig mit den Auflagerstegen 26 fest, also unverschieblich und unverdrehbar, verbunden sind.

Andernendig weisen die Lagerarme 28 jeweils ein Schwenklager zur verschwenkbaren Lagerung der Waggonseitenwände 13 um die jeweilige Seitenwandschwenkachse 25 auf. Die Waggonkopfstücke 21 weisen ebenfalls ein korrespondierendes Schwenklager auf.

Jeder Güterwaggon 7 weist zudem vorzugsweise zumindest vier erste Verriegelungseinrichtungen (nicht dargestellt) zur Verriegelung bzw. Arretierung der Waggonseitenwände 13 in ihrer eingeklappten Stellung (Fig. 1) auf. Insbesondere sind für jede Waggonseitenwand 13 jeweils zumindest zwei erste Verriegelungseinrichtungen vorhanden, wobei jeweils eine erste Verriegelungseinrichtung pro Auflagersteg 26 vorhanden ist. Die Verriegelungseinrichtungen sind also jeweils im Bereich der Auflagerstege 26 angeordnet und verriegeln diese mit den Waggonkopfstücken 21. Zudem sind die Verriegelungseinrichtungen vorzugsweise gemäß der DE 10 2012 004 945 A1 ausgebildet.

Demgemäß weist eine erste Verriegelungseinrichtung zwei in Waggonlängsrichtung 7a hin- und her verfahrbare Verriegelungsbolzen auf. Die Verriegelungsbolzen sind die jeweils in Waggonlängsrichtung 7a hin- und her verschieblich an dem Kopfstückrahmengestell 22 gelagert. Zudem weisen die Verriegelungseinrichtungen jeweils zwei seitenwandfeste Verriegelungsgehäuse mit einer Verriegelungsaussparung auf. Die Verriegelungsbolzen können in die Verriegelungsaussparung einfahren und aus dieser heraus fahren. In der eingefahrenen Stellung ist die Waggonseitenwand 13 mit dem Waggonkopfstück 21 verriegelt. Für jeden Verrieglungsbolzen weist eine erste Verriegelungseinrichtung zudem jeweils einen, bevorzugt identischen, Hebelmechanismus zur Betätigung, also zum Ein-und Ausfahren, des Verriegelungsbolzens auf.

Vorzugsweise weist jeder Güterwaggon 7 zudem eine zweite Verriegelungseinrichtung gemäß der DE 10 2012 004 945 A1 auf, die durch Aufsetzen des Waggonaufsatzes 16 aktivierbar ist.

Zur Betätigung der ersten Verriegelungseinrichtungen weist die Güterumschlagvorrichtung 2 vorzugsweise jeweils eine Schwenk- und Entriegelungseinrichtung 29 (in Fig. 2 schematisch dargestellt) auf. Diese sind ebenfalls aus der DE 10 2012 004 945 A1 bekannt. Die Schwenk- und Entriegelungseinrichtungen 29 dienen zum Lösen der Verriegelung der Waggonseitenwände 13 durch die Verriegelungsbolzen sowie zum kontrollierten, geführten Auf- und Einklappen der Waggonseitenwände 13.

Wie bereits erläutert, dient das Waggonuntergestell 14 und insbesondere dienen die Waggonseitenwände 13 zur Aufnahme des Waggonaufsatzes 16. Dieser weist eine zur Waggonlängsrichtung 7a parallele Aufsatzlängsrichtung 16a, eine zur Waggonquerrichtung 7b parallele Aufsatzquerrichtung 16b und eine zur Waggonhöhenrichtung 7c parallele Aufsatzhöhenrichtung 16c auf. In Aufsatzlängsrichtung 16a gesehen weist der Waggonaufsatz 16 zudem ein erstes Aufsatzstirnende 30a und ein zweites Aufsatzstirnende 30b auf.

Wie bereits erläutert handelt es sich bei dem Güterwaggon 7 um einen geschlossenen Güterwaggon 7. Infolgedessen ist der Waggonaufsatz 16 geschlossen bzw. gedeckt bzw. bedeckt ausgebildet und weist eine Aufsatzbodenwandung 31, zwei Aufsatzseitenabdeckungen 32, zwei Aufsatzstirnwandungen 33 und ein geschlossenes Aufsatzdach 34 auf. Die Aufsatzbodenwandung 31, die Aufsatzseitenabdeckungen 32, die Aufsatzstirnwandungen 33 und das Aufsatzdach 34 begrenzen einen Waggonaufsatzinnenraum bzw. Laderaum bzw. Frachtraum 35 des Waggonaufsatzes 16 bzw. schließen diesen nach außen ab.

Die Aufsatzbodenwandung 31 und die beiden Aufsatzstirnwandungen 33 sind vorzugsweise massiv aus Metallblech, insbesondere mit Versteifungsrippen, ausgebildet. Denn diese Bauteile haben eine tragende Funktion. Dabei müssen diese Bauteile aber nicht zwangsweise massiv ausgebildet sein, sondern können auch anderweitig tragend ausgebildet sein.

Das Aufsatzdach 34 kann ebenfalls derart ausgebildet sein. Alternativ handelt es sich beispielsweise bei dem Aufsatzdach 34 um eine Plane oder eine Kombination eines Stab-Fachwerkes mit einer darüber gezogenen Plane. Zudem muss das Aufsatzdach 34 nicht vollständig eben ausgebildet sein, sondern kann z.B. einen ebenen, mittigen Dachabschnitt aufweisen, der sich über zwei schräge, äußere bzw. seitliche Dachabschnitte an die jeweilige Aufsatzseitenabdeckung 32 anschließt und über zwei schräge, stirnseitige Dachabschnitte an die jeweilige Aufsatzstirnwandung 33 anschließt.

Die beiden Aufsatzseitenabdeckungen 32 oder nur eine davon können ebenfalls tragend ausgebildet sein.

Die den Waggonaufsatz 16 nach unten und außen begrenzende Aufsatzbodenwandung 31 ist vorzugsweise gestuft ausgebildet und weist zwei horizontale, stirnendseitige Bodenwandungsabschnitte 31a, einen mittigen, horizontalen Bodenwandabschnitt 31b und zwei, insbesondere vertikale, Bodenwandungsabschnitte 31c auf, welche jeweils einen der beiden stirnendseitigen Bodenwandungsabschnitte 31a mit dem mittigen Bodenwandungsabschnitt 31b verbinden.

In Aufsatzlängsrichtung 16a gesehen ist der mittige Bodenwandungsabschnitt 31b zwischen den beiden stirnendseitigen Bodenwandungsabschnitten 31a angeordnet. Die Aufsatzbodenwandung 31 ist somit in Aufsatzlängsrichtung 16a gestuft ausgebildet. Zudem ist der mittige Bodenwandungsabschnitt 31b relativ zu den beiden stirnseitigen Bodenwandungsabschnitten 31a in Aufsatzhöhenrichtung 16c gesehen nach unten versetzt angeordnet. Der mittige Bodenwandungsabschnitt 31b ist also tiefer angeordnet als die beiden stirnseitigen Bodenwandungsabschnitte 31a.

In Aufsatzquerrichtung 16b erstrecken sich die Bodenwandungsabschnitte 31a;31b;31c jeweils über die gesamte Breite bzw. Quererstreckung des Waggonaufsatzes 16.

Zumindest einer der beiden stirnseitigen Bodenwandungsabschnitte 31a weist vorzugsweise zudem einen Königszapfen 24 auf, der außenseitig von dem stirnseitigen Bodenwandungsabschnitt 31a vertikal nach unten absteht.

Die beiden Aufsatzseitenabdeckungen 32 sind vorzugsweise senkrecht zur Aufsatzquerrichtung 16b ausgebildet. Sie schließen den Waggonaufsatz 16 jeweils seitlich ab. Infolgedessen schließen sie sich jeweils an die Aufsatzbodenwandung 31, die beiden Aufsatzstirnwandungen 33 und das Aufsatzdach 34 an.

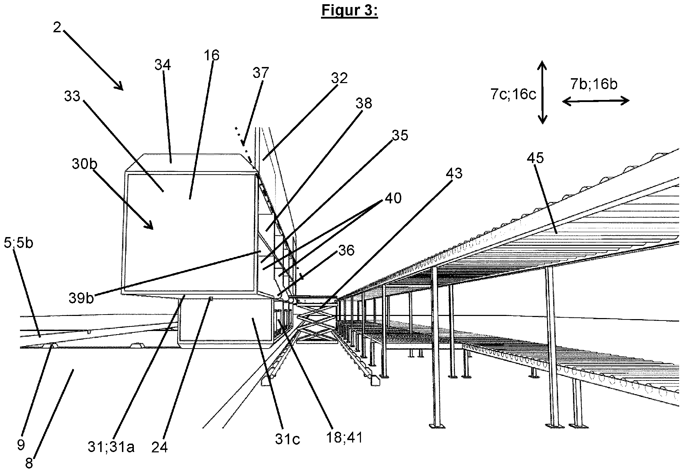

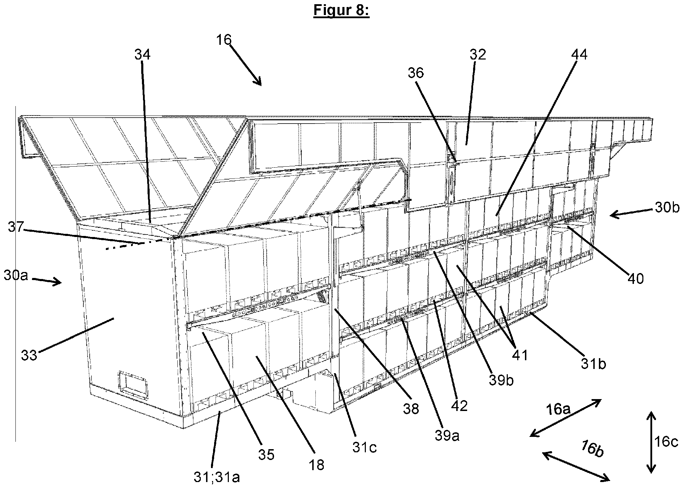

Zumindest eine der beiden Aufsatzseitenabdeckungen 32 ist öffenbar. Beispielsweise ist die öffenbare Aufsatzseitenabdeckung 32 insbesondere massiv aus Metallblech ausgebildet und aufklappbar, wobei sie vorzugsweise um eine zur Aufsatzlängsrichtung 16a parallele Aufsatzseitenabdeckungsschwenkachse 37 nach oben klappbar bzw. schwenkbar ist (siehe Fig. 3;8). Die massive, wandartige Aufsatzseitenabdeckung 32 kann aber auch zusätzlich faltbar (siehe Fig. 4) sein oder mehrteilig aus mehreren öffenbaren Klappen bestehen (nicht dargestellt).

Wie bereits erläutert, muss die öffenbare Aufsatzseitenabdeckung 32 aber nicht massiv aus Metallblech ausgebildet sein. Sie kann z.B. auch als aufrollbare oder zusammenfaltbare Plane mit oder ohne Stäbe oder anders ausgeführt sein.

Zum Öffnen weist der Waggonaufsatz 16 vorzugsweise eine geeignete Aufsatzseitenabdeckungsöffnungseinrichtung auf. Mit der Aufsatzseitenabdeckungsöffnungseinrichtung steht die Aufsatzseitenabdeckung 32 öffenbar und wieder schließbar in Verbindung. Die notwendige Antriebenergie wird z.B. induktiv oder mittels einer mechanischen, z.B. einer schleifenden oder steckenden, Kontaktierung mit einer Stromquelle bereitgestellt. Entsprechende Kontaktelemente sind dann jeweils am Waggonaufsatz 16 und in der Güterumschlagvorrichtung 2 vorhanden.

Alternativ weist die Güterumschlagvorrichtung 2 eine externe, also nicht mit dem Waggonaufsatz 16 fest verbundene, Aufsatzseitenabdeckungsöffnungseinrichtung (nicht dargestellt) auf, mit welcher die Aufsatzseitenabdeckung 32 öffenbar und wieder schließbar in Verbindung bringbar ist. Dies kann z.B. per Übertragung eines Drehmomentes eines externen Elektroantriebes per formschlüssiger, aber trennbarer Kupplung auf ein Öffnungsgetriebe der Aufsatzseitenabdeckung 32, welches im Waggonaufsatz 16 angeordnet ist, erfolgen.

Das Öffnen kann aber auch manuell erfolgen.

Die beiden Aufsatzstirnwandungen 33 sind vorzugsweise senkrecht zur Aufsatzlängsrichtung 16a ausgebildet. Sie schließen den Waggonaufsatz 16 zudem an jeweils einem der beiden Aufsatzstirnenden 30a;b ab.

Des Weiteren weist der Waggonaufsatz 16 zudem mehrere, vorzugsweise zwei Auflageelemente 36, insbesondere feste oder klappbare Winkelelemente aus Metall, bevorzugt Stahlwinkel, auf, mit welchen der Waggonaufsatz 16 direkt auf den Waggonseitenwänden 13, insbesondere der Wandoberkante 13a, aufliegt.

Die Auflageelemente 36 stehen in Aufsatzquerrichtung 16b über die Aufsatzseitenabdeckungen 32 nach außen über.

Erfindungsgemäß weist der Waggonaufsatz 16 zudem zumindest eine vertikale, zur Aufsatzlängsrichtung 16a senkrechte, Zwischenwand 38 und zumindest einen horizontalen Zwischenboden 39a;b auf. Vorzugsweise weist der Waggonaufsatz 16 mehrere vertikale, zur Aufsatzlängsrichtung 16a senkrechte Zwischenwände 38 und mehrere horizontale Zwischenböden 39a;b auf. Die Zwischenwände 38 und die Zwischenböden 39a;b unterteilen den Laderaum 35 in einzelne, bevorzugt quaderförmige, Kompartments bzw. Fächer bzw. Abteile 40.

Der Waggonaufsatz 16 weist also mehrere, neben- und übereinander angeordnete Abteile 40 auf.

Zudem bestehen die Zwischenwände 38 und Zwischenböden 39a;b vorzugsweise aus Metall oder Kunststoff und sind bevorzugt massiv oder als Gitter ausgebildet.

Die Zwischenböden 39a;b erstrecken sich vorzugsweise jeweils über die gesamte Länge des Waggonaufsatzes 16.

Zudem sind mehrere in Aufsatzlängsrichtung 16a zueinander benachbarte, vertikale Zwischenwände 38 vorhanden. Diese erstrecken sich vorzugsweise durchgehend über die gesamte Höhe des Waggonaufsatzes 16.

Die vertikalen, zur Aufsatzlängsrichtung 16a senkrechten Zwischenwände 38 erstrecken sich zudem vorzugsweise durchgehend über die gesamte Breite des Laderaums 35, so dass alle Abteile 40 von beiden Seiten des Waggonaufsatzes 16 nach dem Öffnen der jeweiligen Aufsatzseitenabdeckung 32 zugänglich sind. Folglich sind vorzugsweise auch keine zur Aufsatzlängsrichtung 16a parallelen Zwischenwände vorhanden.

Dies ist jedoch möglich. Wesentlich ist aber, dass jedes Abteil 40 zumindest von einer Seite des Waggonaufsatzes 16 nach dem Öffnen der jeweiligen Aufsatzseitenabdeckung 32 zugänglich sind bzw. nach dem Öffnen der jeweiligen Aufsatzseitenabdeckung 32 zu einer Seite des Waggonaufsatzes 16 hin offen ist. Denn dadurch wird die schnelle Be- und Entladung der Abteile 40 gewährleistet.

Des Weiteren sind die Zwischenwände 38 in Aufsatzlängsrichtung 16a unverschiebbar oder verstellbar und in unterschiedlichen Positionen mit entsprechenden Fixierungsmitteln fixierbar. Und die Zwischenböden 39a;b sind in Aufsatzhöhenrichtung 16c unverschiebbar oder verstellbar und in unterschiedlichen Positionen mit entsprechenden Fixierungsmitteln fixierbar. Dadurch können die Abmessungen der Abteile 40 variiert werden und an die Abmessungen des zu transportierenden Stückgutes angepasst werden.

Die einzelnen Abteile 40 weisen zudem vorzugsweise folgende Abmessungen auf:

| | | bevorzugt |
|---|---|---|
| | [cm] | [cm] |
| Innenlänge | 200 bis 400 | 300 bis 340 |
| Innenbreite | 240 bis 260 | 250 bis 255 |
| Innenhöhe | 80 bis 140 | 105 bis 120 |

Die einzelnen Abteile 40 dienen, wie bereits erläutert, zur Aufnahme von Stückgut 18. Insbesondere dienen sie zur Aufnahme von quaderförmigen Behältern bzw. Boxen bzw. Kästen 41 oder dergleichen, welche mit losem Transportgut bzw. Containergut befüllt sind. Gegebenenfalls sind die Behälter 41 zudem jeweils auf einer Transportpalette 42, bevorzugt einer Europalette, angeordnet.

Insbesondere handelt es sich bei den Behältern 41 zudem um VDA-Behälter (=Kleinladungsträger) und/oder Gitterboxen und/oder Großpackmittel (IB- Intermediate Bulk Container). Die Behälter 41 sind entweder oben offen oder weisen einen Deckel auf.

Ganz allgemein kann es sich bei dem Stückgut 18 um Gebinde aller Art handeln.

Die Behälter 41 sind vorzugsweise in Waggonlängsrichtung 7a bzw. Aufsatzlängsrichtung 16a formschlüssig mit wenigen Zentimetern, insbesondere 1-2 cm, Luft pro Zwischenraum als Toleranz in den Abteilen 40 angeordnet und dadurch automatisch durch die vertikalen Zwischenwände 38 gegen Verrutschen in Waggonlängsrichtung 7a bzw. Aufsatzlängsrichtung 16a gesichert. Gleiches gilt für die Waggonquerrichtung 7b bzw. Aufsatzquerrichtung 16b.

Sind mehrere Behälter 41 in einem Abteil 40 angeordnet, sind deren Gesamtabmessungen entsprechend auf die Abmessungen des Abteils 40 abgestimmt. Dabei können sowohl in Aufsatzlängsrichtung 16a als auch in Aufsatzquerrichtung 16b gesehen mehrere Behälter 41 nebeneinander in demselben Abteil 40 angeordnet sein.

Gemäß einer bevorzugten Ausführungsform weisen die Abteile 40 bzw. weist zumindest ein Teil der Abteile 40 zumindest teilweise Mittel zur Ladungssicherung auf. Vorzugsweise handelt es sich hierbei um Zurrgurte und/oder Staupolster und/oder rutschhemmende Matten auf dem Abteilboden und/oder rutschhemmenden Bodenbelag der Abteilböden und/oder Luftkissen. Die Staupolster und/oder die Luftkissen werden unter und/oder zwischen den einzelnen Stückgütern 18 eines Abteils 40 angeordnet.

Des Weiteren weisen die Abteile 40 bzw. weist zumindest ein Teil der Abteile 40 vorzugsweise Mittel zur Vibrations- und Erschütterungsbegrenzung auf. Vorzugsweise handelt es sich hierbei um Antivibrationsmatten und/oder Lagerkissen und/oder eine federgelagerte Stoßdämpfung und/oder eine hydraulische Stoßdämpfung.

Außerdem weisen die Abteile 40 bzw. weist zumindest ein Teil der Abteile 40 vorzugsweise Mittel zur Klimatisierung, also zur Einstellung der Temperatur und/oder der Luftfeuchte, des Abteils 40 auf. Vorzugsweise handelt es sich hierbei um einen Luft-Wärmetauscher.

Zudem weisen die Abteile 40 bzw. weist zumindest ein Teil der Abteile 40 vorzugsweise Mittel zur, insbesondere kontinuierlichen, Überwachung bzw. Messung konkreter Zustandsparameter der Abteile 40 auf. Vorzugsweise weisen die Abteile 40 jeweils
- zumindest einen Sensor zur Messung der Vibration des Abteils 40 und/oder
- zumindest einen Sensor zur Messung der Temperatur des Abteils 40 und/oder
- zumindest einen Sensor zur Messung der Feuchtigkeit des Abteils 40 und/oder
- Mittel zur Gewichtsmessung jedes in einem Abteil 40 angeordneten Stückgutes 18 und/oder
- Mittel zur Positionsbestimmung jedes in einem Abteil 40 angeordneten Stückgutes 18.
auf.

Die Mittel zur Gewichtsmessung dienen insbesondere auch zur Detektion von Gewichtsverlagerung der einzelnen Stückgüter 18.

Bei den Mitteln zur Positionsbestimmung handelt es sich vorzugsweise um Ultraschallsensoren. Insbesondere dienen die Mittel zur Positionsbestimmung zur Detektion des Verrutschens und/oder der Verformung des Stückgutes 18.

Zudem weist der Waggonaufsatz 16 vorzugsweise ebenfalls Mittel zur, insbesondere kontinuierlichen, Überwachung bzw. Messung konkreter Zustandsparameter des Waggonaufsatzes 16 auf. Vorzugsweise weist der Waggonaufsatz 16 zumindest einen Sensor zur Messung der Beschleunigung und/oder zumindest einen Sensor zur Messung der Neigung des Waggonaufsatzes 16 und/oder einen Sensor zur Ortung des Waggonaufsatzes 16 auf.

Zudem kann vorteilhaft auch der Güterwaggon 7 einen Sensor zur Ortung des Güterwaggons 7 aufweisen.

Vorzugsweise weist der Waggonaufsatz 16 zudem eine Stromerzeugungseinrichtung, bevorzugt eine Solarstromanlage, besonders bevorzugt eine Photovoltaikanlage, zur Erzeugung von elektrischer Energie zur Versorgung von elektrischen Bauteilen, insbesondere der Mittel zur Messung der Zustandsparameter und/oder der Mittel zur Klimatisierung und/oder der waggonaufsatzfesten Aufsatzseitenabdeckungsöffnungseinrichtung, des Waggonaufsatzes 16 auf. Die Solarstromanlage ist vorzugsweise Teil des Aufsatzdaches 34.

Alternativ oder zusätzlich zu der Solarstromanlage kann der Güterwaggon 7 auch eine Stromerzeugungseinrichtung in Form eines an sich bekannten Achsgenerators aufweisen.

Wie bereits erläutert, ist der Waggonaufsatz 16 auf dem Waggonuntergestell 14 gelagert. Die Auflageelemente 36 des Waggonaufsatzes 16 liegen dabei auf den Wandoberkanten 13a der beiden Waggonseitenwände 13 auf. Zudem ist der Königszapfen 24, falls vorhanden, in der Königszapfenarretierungseinrichtung 23 angeordnet und wird von diesen verriegelt. Dadurch ist der Waggonaufsatz 16 in horizontaler Richtung mit dem Waggonuntergestell 14 verriegelt.

Die beiden stirnseitigen Bodenwandungsabschnitte 31a sind somit über den beiden Waggonkopfstücken 21 angeordnet. Der mittlere Bodenwandungsabschnitt 31b und die beiden vertikalen Bodenwandungsabschnitte 31c sind in Waggonlängsrichtung 16a gesehen zwischen den beiden Waggonkopfstücken 21 angeordnet. Der mittlere Bodenwandungsabschnitt 31b ist dabei vorzugsweise knapp oberhalb der Schienenoberkante der Gleisanlage 5 angeordnet, insbesondere 15 bis 50 cm, bevorzugt 18 bis 24 cm darüber.

Vorzugsweise sind die Außenabmessungen des Waggonaufsatzes 16 zudem so bemessen, dass der Güterwaggon 7 entweder eines oder mehrere der von den europäischen Infrastrukturbetreibern vorgeschriebenen Lademaße, insbesondere das Lademaß der Deutschen Bahn nach Anhang II Tafel 1.4 der internationalen Vereinbarung für den Einsatz von Güterwagen (RIV von 2006), und/oder das Lademaß der SBB nach Tafel 1.6 der Anlage II der RIV, und/oder die Fahrzeugeinschränkungen die sich nach einer oder mehreren der in der europäischen "Technischen Spezifikation Interoperabilität Güterwaggons (TSI), Entscheidung der EU-Kommission 2006/861/EG, Aktenzeichen K(2006) 3345, festgelegten kinematischen Bezugslinien insbesondere Bezugslinien G1,G2, GA,GB,GC, GB1,GB2, 3.3 oder anderen ergeben.

Vorzugsweise weist der Waggonaufsatz 16 folgende Außenabmessungen auf:

| | | bevorzugt |
|---|---|---|
| | [m] | [m] |
| Länge | 15 bis 20 | 17 |
| Breite (Auflageelemente nicht mitgerechnet) | 2,6 bis 2,9 | 2,65 |
| Höhe | 3,8 bis 4,5 | 4 |

Vorzugsweise weist der Waggonaufsatz 16 zudem zumindest einen, insbesondere mobilen, Datenträger, z.B. einen RFID-Chip, und/oder oder eine Markierung, bevorzugt einen Code, insbesondere einen Barcode oder einen QR-Code, auf.

Auf dem Datenträger sind unter anderem Informationen bezüglich der Beladung des Waggonaufsatzes 16 enthalten. Beispielsweise sind Informationen über die Güteklasse und/oder die Güterart (NHM-Nummer) und/oder die Gefahrgutklasse des jeweiligen Stückgutes 18 enthalten und wo dieses angeordnet ist. Aufgrund der Einteilung in die einzelnen Abteile 40 ist die Informationen bezüglich des Stellplatzes sehr einfach und genau speicherbar.

Die NHM-Nummer (NHM = Nomenclature Harmonisée Marchandises - Harmonisiertes Güterverzeichnis) dient bekanntermaßen der Warencodierung im Eisenbahngüterverkehr. Sie ist notwendig für die datentechnische Abwicklung des Güterverkehrs.

Im Gegensatz zu dem Datenträger, auf den die Informationen geschrieben, gespeichert und abgelesen werden können, stellen die Markierungen einen Link zu einer Web-Datenbank dar, auf der die jeweiligen Informationen gespeichert sind.

Der Waggonaufsatz 16 kann zusätzlich oder alternativ zudem Referenzpunkte, insbesondere Sichtmarken aufweisen, die von einem Be- und Entladegerät 43 automatisch mittels einer Auswertesoftware in einem digitalen Kamerabild erkannt werden. Die Sichtmarken können als entsprechend aus Punkten, Rechtecken, Geraden und Kreisen gestaltete Markierungen insbesondere an den Schnittpunkten zwischen vertikalen und horizontalen Begrenzungswänden der Abteile 40 angeordnet sein.

Bei dem Be- und Entladegerät 43 handelt es sich vorzugsweise um ein an sich bekanntes Regalbediengerät. Das Be- und Entladegerät 43 ist vorzugsweise wie in der DE 10 2014 013 778 A1 beschrieben ausgebildet und angeordnet.

Das Be- und Entladen der Waggonaufsätze 16 auf bzw. vom Waggonuntergestell 14 erfolgt dabei insbesondere ebenfalls wie in der DE 10 2014 013 778 A1 beschrieben:
Insbesondere erfolgt das Entladen wie folgt:
a) Abheben der Waggonaufsätze 16 von den Waggonuntergestellen 14,
b) Transportieren der abgehobenen Waggonaufsätze 16 zur Verladebahn 8 und Absetzen auf einer Unterlage, vorzugsweise der Verladebahn 8 oder fahrbaren Untersätzen 46,
c) Bevorzugt automatisiertes, Entladen der Waggonaufsätze 16, insbesondere automatisiertes Entnehmen zumindest eines Teils der Stückgüter 18 aus den Abteilen 40, vorzugsweise mittels des automatisierten Be- und Entladegerätes 43, insbesondere des Regalbediengerätes.

Mittels Quertransporteinrichtungen, insbesondere der Shuttlebalken 9, erfolgt das Entladen vorzugsweise wie folgt:
a) Abheben der Waggonaufsätze 16 von den Waggonuntergestellen 14,
b) Entriegeln und Abklappen der Waggonseitenwände 13 nach außen,
c) Verfahren von zumindest jeweils zwei Quertransporteinrichtungen, insbesondere der Shuttlebalken 9, unter jeweils einen Waggonaufsatz 16
d) Absetzen der Waggonaufsätze 16 auf den Quertransporteinrichtungen, insbesondere den Shuttlebalken 9,
e) Verfahren der Quertransporteinrichtungen, insbesondere der Shuttlebalken 9 auf die Verladebahn 8,
f) Vorzugsweise Absetzen der Waggonaufsätze 16 auf einer Unterlage, insbesondere der Verladebahn 8 oder den Untersätzen 46,
g) Vorzugsweise automatisiertes, Entladen der Waggonaufsätze 16, insbesondere automatisiertes Entnehmen des Stückguts 18 aus den Abteilen 40, vorzugsweise mittels des automatisierten Be- und Entladegerätes 43, insbesondere des Regalbediengerätes, wobei vorzugsweise das Be- und Entladegerät 43 mittels eines Steuermittels, bevorzugt des Leitrechners gesteuert wird.

Das Beladen erfolgt dann in an sich bekannter Weise entsprechend in umgekehrter Reihenfolge.

Die in dem Waggonaufsatz 16 enthaltende Ladung kann nun auf verschiedene Arten nach dem Entladen des Waggonaufsatzes 16 von dem Waggonuntergestell 14 weiter transportiert werden, insbesondere wie ebenfalls in der DE 10 2014 013 778 A1 beschrieben:
Gemäß einer Variante weist die Güterumschlagvorrichtung 2 wie oben beschrieben das Be- und Entladegerät 43, insbesondere das Regalbediengerät, auf, welches auf der der Gleisanlage 5 abgewandten Seite der Verladebahn 8 angeordnet ist und in Aufsatzlängsrichtung 16a hin- und her verfahrbar ist. Auf der der Verladebahn 8 abgewandten Seite des Be- und Entladegeräts 43 ist ein Lager, vorzugsweise ein Hochregallager 45, angeordnet. Das Stückgut 18 wird aus dem Waggonaufsatz 16 entnommen und an einer vorbestimmten Stelle in das Lager, vorzugsweise das Hochregallager 45, eingelagert. Dies erfolgt vorzugsweise automatisiert gesteuert.

Das Öffnen der Aufsatzseitenabdeckung 32 erfolgt entweder manuell oder automatisiert mittels einer waggonaufsatzfesten oder der externen Aufsatzseitenabdeckungsöffnungseinrichtung.

Gemäß einer weiteren Variante, ist anstelle des Hochregallagers 45 ein Transportmittel, z.B. ein Förderband, eine Rollenbahn, eine Rollenförderbahn oder ein Routenzug vorhanden. Das Stückgut 18 wird dann auf dem jeweiligen Transportmittel, insbesondere automatisiert, abgesetzt und von dem Transportmittel automatisiert zum Bestimmungsort abtransportiert.

Alternativ dazu werden die Waggonaufsätze 16 nicht direkt auf der Verladebahn 8, sondern auf wartenden, verfahrbaren Untersätzen 46 abgesetzt, welche auf der Verladebahn 8 bereit stehen. Insbesondere der verfahrbare Waggonaufsatz 16 mit den Untersätzen 46 kann auch außerhalb der Güterumschlagvorrichtung 2 ent- und beladen werden.

Des Weiteren muss der Waggonaufsatz 16 zum Entladen nicht vorher von dem Waggonuntergestell 14 abgenommen werden. Die Entladung des Waggonaufsatzes 16 kann auch erfolgen, wenn der Waggonaufsatz 16 auf dem Waggonuntergestell 14 angeordnet ist. Das Vorherige Abnehmen des Waggonaufsatzes 16 vom Waggonuntergestell 14 ist aber bevorzugt.

Das Beladen des Waggonaufsatzes 16 erfolgt in umgekehrter Weise wie das Entladen.

Erfindungsgemäß weist die Gütertransportvorrichtung 1 zudem, wie bereits erläutert, das computergesteuerte Buchungssystem 4 zur Buchung von einzelnen Laderaumbereichen 44 des Laderaums 35 auf. Mit Laderaumbereich 44 ist also ein Teil des Laderaums 35 und nicht der gesamte Laderaum gemeint.

Unter einem computergesteuerten Buchungssystem versteht man bekanntermaßen eine Computeranwendung, mit der Ressourcen zeitlich begrenzt und konfliktfrei reserviert werden können.

Das computergesteuerte Buchungssystem 4 ist dazu eingerichtet, dass von einem jeweiligen Auftraggeber bzw. Kunden, der eine Ladungseinheit bzw. Frachteinheit in Form eines oder mehrerer Stückgüter von einem ersten Ort, dem Standort der Ladungseinheit, zu einem Zielort verschicken möchte, hierfür ein Laderaumbereich 44 des Laderaums 35 eines Güterwaggons 7 eines Güterzuges 3 gebucht werden kann. Die Ladungseinheit wird auf ihrem Weg vom Startort zum Zielort zumindest auf einer Teilstrecke mittels eines Güterwaggons 7 transportiert. Dafür verkehren die Güterzüge 3 auf einem Streckennetz bzw. Schienennetz, vorzugsweise nach einem festen Fahrplan, zwischen den Güterumschlagvorrichtungen 2.

Eine Ladungseinheit besteht also aus einem oder mehreren Stückgütern 18, die ein Auftraggeber/Kunde gemeinsam transportiert haben möchte.

Je nach Anzahl und Größe der Stückgüter 18 kann ein Laderaumbereich 44 dabei aus einem oder mehreren Abteilen 40 bestehen oder auch nur aus einem Abteilbereich eines Abteils 40.

Das computergesteuerte Buchungssystem 4 weist insbesondere in an sich bekannter Weise zumindest ein Datenbanksystem und eine Schnittstelle, vorzugsweise ein Webportal, für die Vornahme der Buchung seitens eines Users auf.

Das Datenbanksystem dient zur Speicherung aller zur Buchung notwendigen Daten. Insbesondere dient es zur Speicherung einer oder mehrerer der folgenden Informationen bzw. Daten:
- Fahrpläne der Güterzüge 3
- Anzahl und Anordnung der Abteile 40 der Güterwaggons 7 der Güterzüge 3
- Spezifische Informationen bezüglich der einzelnen Abteile 40, insbesondere
   - Eignung des jeweiligen Abteils 40 für den Gefahrguttransport
   - Eignung des jeweiligen Abteils 40 für den Transport von Stückgütern mit bestimmter NHM-Nummer oder bestimmten NHM-Nummern
   - Eignung des jeweiligen Abteils 40 für den Transport von empfindlichen Stückgütern 18, insbesondere von vibrationsempfindlichen und/oder temperaturempfindlichen und/oder feuchtigkeitsempfindlichen Stückgütern 18
   - Maximale Lademaße des zu transportierenden Stückgutes 18
   - Maximales Ladegewicht des zu transportierenden Stückgutes 18
   - Auslastung der jeweiligen Abteile 40 zur Zeit der Buchung

Die Buchung des Laderaumbereichs 44 durch den User erfolgt über die Schnittstelle, vorzugsweise über das Webportal. Der User gibt beispielsweise den gewünschten Start- und Zielort 47;48, Datum, gegebenenfalls Uhrzeit, sowie weitere Informationen bezüglich seiner zu transportierenden Ladungseinheit, insbesondere die Art und Anzahl der Stückgüter sowie deren Gewicht ein.

Vorzugsweise können auch besondere Anforderungen wie Gefahrgut- oder Empfindlichkeitsklasse angegeben werden.

Daraufhin werden dem User die in Frage kommende(n) Start-Güterumschlagvorrichtung(en) 2 angezeigt, wo er seine Ladungseinheit bzw. sein Frachtgut hinbringen kann. Zudem werden dem User auch die in Frage kommende(n) Ziel-Güterumschlagvorrichtung(en) 2 angezeigt, wo seine Ladungseinheit bzw. sein Frachtgut ankommt. Kommen jeweils mehrere Güterumschlagvorrichtungen 2 in Frage, kann der User jeweils die gewünschte Güterumschlagvorrichtung 2 auswählen.

Gemäß einer ersten Ausführungsform wird der zu transportierenden Ladungseinheit mit Hilfe eines rechnergestützten Algorithmus je nach Start- und Zielort 47;48, gewünschtem Transportdatum und weiteren Attributen ein Laderaumbereich 44 auf einem spezifischen Güterwaggon 7 eines Güterzuges 3 zugeteilt, der zur passenden Zeit auf einer passenden Strecke verkehrt.

Durch die automatisierte Zuteilung wird eine optimale Auslastung der Güterzüge 3 erreicht.

Alternativ dazu ist das Buchungssystem 4 so eingerichtet, dass der User, insbesondere auf einer interaktiven Innenansicht des Laderaums 35, selbst den Laderaumbereich 44 auswählen kann.

In jedem Fall erhält der User nach Abschluss der Buchung die genauen Informationen zu dem gebuchten Laderaumbereich 44, also unter anderem welche Abteile 40 er auf welchem Güterwaggon 7 welchen Güterzuges 3 gebucht hat.

Vorzugsweise ist das Buchungssystem 4 zudem derart eingerichtet, dass es dem Kunden ermöglicht, den Zustand der Ladungseinheit jederzeit zu prüfen.

Vorzugsweise ist das Buchungssystem 4 hierzu derart eingerichtet, dass es dem User ermöglicht, die gemessenen Zustandsparameter in dem Laderaumbereich 44, wie z.B. Temperatur oder Luftfeuchtigkeit, während des Transports, jederzeit zu prüfen. Die gemessenen Zustandsparameter werden dem User als Livedaten zur Verfügung gestellt und/oder er kann sie auch nach dem Transport abrufen. Hierzu greift das Buchungssystem 4 auf die Mittel zur Messung der Zustandsparameter der Abteile 40 zurück.

Des Weiteren ist das Buchungssystem 4 vorzugsweise auch dazu eingerichtet, dass der User optional eine First- und/oder Last-Mile Abwicklung buchen kann. Unter First-Mile Abwicklung versteht man den Transport der Ladungseinheit vom Standort bzw. Startort 47 der Ladungseinheit zur Start-Güterumschlagvorrichtung 2. Unter Last-Mile Abwicklung versteht man den Transport der Ladungseinheit von der Ziel-Güterumschlagvorrichtung 2 zum finalen Zielort 48.

Vorzugsweise erfolgt dieser Transport mittels des Nahverkehrs 49, bevorzugt mittels elektrisch betriebener Fahrzeuge. Er kann aber selbstverständlich auch mittels herkömmlicher LKW's oder Kleintransporter erfolgen.

Vorteil des erfindungsgemäßen Verfahrens ist, dass aufgrund der Verwendung des Waggonaufsatzes 16 mit den einzelnen Abteilen 40, der Laderaum 35 in einzelne Laderaumbereiche 44 mit fest definierten Maßen und Umgebungsbedingungen aufgeteilt werden kann. Da die Laderaumbereiche 44 komplett unabhängig voneinander be- und entladen werden können, ist es für den Kunden überhaupt erst möglich, nur den für seine Ladungseinheit tatsächlich benötigten Raum in dem Güterwaggon 7 für den Schienentransport zu beanspruchen. Durch diese Unabhängigkeit der einzelnen Laderaumbereiche 44 können innerhalb eines Laderaums 35 auch verschiedenste Arten von Ladungseinheiten gleichzeitig und nebeneinander transportiert werden, wodurch eine vollständige Auslastung und maximale Platzeffizienz möglich sind. Außerdem können dadurch in dem Laderaum 35 die verschiedenen Kunden ihre Ladungseinheit exakt zuordnen und durch den Transportprozess hinweg nachverfolgen.

Durch das erfindungsgemäße Verfahren wird es somit ermöglicht, Teil-ladungen, also Ladungseinheiten, die den Laderaum 35 nicht vollständig ausfüllen, effizienter, sicherer und klimaschonender zu transportieren. Die vorzugsweise vorhandenen Sensoren gewährleisten zudem eine vollumfängliche Ladungsüberwachung über die gesamte Transportzeit.

Aufgrund der vorzugsweise vorhandenen Mittel zur Ladungssicherung und der vorzugsweise vorhandenen Mittel zur Klimatisierung können auch besonders sensible Ladungseinheiten transportiert werden.

Weiterer Vorteil des Waggonaufsatzes 16 ist, dass er auch als Zwischenlager für Stückgüter 18 verwendet werden kann.

Im Rahmen der Erfindung liegt es dabei selbstverständlich auch, dass die Ladungseinheit nicht lediglich mittels eines einzigen Güterzuges 3 von der Start-Güterumschlagvorrichtung 2 zur Ziel-Güterumschlagvorrichtung 2 transportiert wird.

Beispielsweise kann der Güterwaggon 7 mitsamt der Ladungseinheit von einem Güterzug 3 abgekoppelt und an einen weiteren Güterzug 3 angekoppelt werden und die Ladungseinheit somit auf einzelnen Streckenabschnitten mit verschiedenen Güterzügen 3 transportiert werden.

Oder der Waggonaufsatz 16 kann dazu von dem Waggonuntergestell 14 des Güterwaggons 7 des einen Güterzuges 3 abgeladen werden und auf das Waggonuntergestell 14 eines Güterwaggons 7 eines weiteren Güterzuges 3 aufgeladen werden.

Auch kann selbstverständlich die Ladungseinheit an sich umgeladen werden.

Dies alles kann auch mehrfach und/oder alternativ erfolgen.

Des Weiteren kann es sich bei dem Güterwaggon 7 auch um einen gedeckten Güterwaggon 7 ohne abnehmbaren Waggonaufsatz 16 handeln. Es kommt aber darauf an, dass der Güterwaggon 7 den Laderaum 35 mit den Abteilen 40 aufweist. Das Be- und Entladen des Güterwaggons 7 mit den Stückgütern 18 bzw. der Stückgüter 18 erfolgt dann direkt auf bzw. vom Güterwaggon 7. Dies gilt selbstverständlich auch für den Waggonaufsatz 16 aufweisenden Güterwaggon 7. Auch dieser kann direkt be- und/oder entladen werden.

Zudem liegt es auch im Rahmen der Erfindung, dass es sich bei Waggonuntersatz 14 um einen Taschenwagen oder anderen Wagen handelt, auf den der Waggonaufsatz 16 derart aufgesetzt ist, dass er mittels eines Krans abgehoben werden kann. Der Kran dient dann sowohl als Hubeinrichtung zum Abheben und Absenken des Waggonaufsatzes 16 von bzw. auf dem Waggonuntergestell 14 als auch als Quertransportmittel zum Transportieren des abgehobenen Waggonaufsatzes 16 zur Verladebahn 8 und von der Verladebahn 8 zum Waggonuntergestell 14.

Auch muss der erfindungsgemäße Waggonaufsatz 16 nicht auf die Waggonseitenwände 13 aufgesetzt sein, sondern kann z.B. auch direkt auf die beiden Waggonkopfstücke 21 aufgesetzt sein.

## Patentansprüche

1. Computergesteuertes Buchungssystem (4),
**dadurch gekennzeichnet, dass**
das Buchungssystem (4) eingerichtet ist zur Buchung eines Laderaumbereichs (44) eines Laderaums (35) eines Güterwaggons (7) eines Güterzuges (3) für den Transport einer eines oder mehrere Stückgüter (18) umfassenden Ladungseinheit mittels des einen Güterzuges (3), wobei der Laderaum (35) mehrere voneinander abgeteilte, neben- und übereinander angeordnete Abteile (40) aufweist, und wobei das Buchungssystem (4) so eingerichtet ist, dass ein User selbst den gewünschten Laderaumbereich (44) auswählen kann.

2. Buchungssystem (4) nach Anspruch 1,
**dadurch gekennzeichnet, dass**
der Laderaum (35) der Laderaum (35) eines Waggonaufsatzes (16) des Güterwaggons (7) ist, der von einem Waggonuntergestell (14) eines Güterwaggons (7) abnehmbar und auf dieses aufsetzbar ist.

3. Buchungssystem (4) nach Anspruch 1 oder 2,
**dadurch gekennzeichnet, dass**
a) das Buchungssystem (4) eingerichtet ist zur Buchung des Transports der Ladungseinheit von einer Start-Güterumschlagvorrichtung (2) zu einer Ziel-Güterumschlagvorrichtung (2) mittels eines einzigen Güterzugs (3) oder verschiedener Güterzüge (3) und/oder mittels eines einzigen Güterwaggons (7) oder verschiedener Güterwaggons (7) und/oder mittels eines einzigen Waggonaufsatzes (16) oder verschiedener Waggonaufsätze (16),
und/oder
b) das Buchungssystem (4) zur Buchung einer First- und/oder Last-Mile Abwicklung eingerichtet ist.

4. Buchungssystem (4) nach einem der vorhergehenden Ansprüche,
**dadurch gekennzeichnet, dass**
das Buchungssystem (4) ein Datenbanksystem und eine Schnittstelle, vorzugsweise ein Webportal, für die Vornahme der Buchung seitens eines Users aufweist.

5. Buchungssystem (4) nach einem der vorhergehenden Ansprüche,
**dadurch gekennzeichnet, dass**
das Buchungssystem (4) so eingerichtet ist, dass der User auf einer interaktiven Innenansicht des Laderaums (35) selbst den gewünschten Laderaumbereich (44) auswählen kann.

6. Buchungssystem (4) nach Anspruch 4 oder 5,
**dadurch gekennzeichnet, dass**
in dem Datenbanksystem eine oder mehrere der folgenden Informationen gespeichert sind:
- Fahrpläne der Güterzüge (3)
- Anzahl und Anordnung der Abteile (40) der Güterwaggons (7) der Güterzüge (3)
- Spezifische Informationen bezüglich der einzelnen Abteile (40), insbesondere:
- Eignung des jeweiligen Abteils (40) für einen Gefahrguttransport
- Eignung des jeweiligen Abteils (40) für den Transport von Stückgütern mit bestimmter NHM-Nummer oder bestimmten NHM-Nummern
- Eignung des jeweiligen Abteils (40) für den Transport von empfindlichen Stückgütern (18), insbesondere von vibrationsempfindlichen und/oder temperaturempfindlichen und/oder feuchtigkeitsempfindlichen Stückgütern (18)
- Maximale Lademaße des zu transportierenden Stückgutes (18)
- Maximales Ladegewicht des zu transportierenden Stückgutes (18)
- Auslastung der jeweiligen Abteile (40) zur Zeit der Buchung

7. Gütertransportvorrichtung (1) zum Schienentransport von Stückgütern (18), aufweisend:
a) mehrere Güterzüge (3) mit jeweils zumindest einem einen Laderaum (35) aufweisenden Güterwaggon (7), wobei der Laderaum (35) mehrere voneinander abgeteilte, neben- und übereinander angeordnete, Abteile (40) aufweist,
b) mehrere Güterumschlagvorrichtungen (2) zum Be- und Entladen der Güterzüge (3) mit bzw. von den Stückgütern (18), wobei die Güterzüge (3) auf einem Schienennetz zwischen den Güterumschlagvorrichtungen (2) verkehren,
**dadurch gekennzeichnet, dass**
die Gütertransportvorrichtung (1) ein Buchungssystem (4) gemäß einem der vorhergehenden Ansprüche aufweist.

8. Gütertransportvorrichtung (1) nach Anspruch 7,
**dadurch gekennzeichnet, dass**
a) ein Laderaumbereich (44) jeweils aus einem oder mehreren Abteilen (40) oder einem Abteilbereich eines Abteils (40) besteht,
und/oder
b) zumindest ein Teil der Abteile (40) eines Güterwaggons (7) Mittel zur Ladungssicherung aufweist,
und/oder
c) zumindest ein Teil der Abteile (40) Mittel zur Vibrations- und Erschütterungsbegrenzung aufweist,
und/oder
d) zumindest ein Teil der Abteile (40) Mittel zur Klimatisierung, insbesondere zur Einstellung der Temperatur und/oder der Luftfeuchte, des Abteils (40) aufweist,
und/oder
e) zumindest ein Teil der Abteile (40) Mittel zur, insbesondere kontinuierlichen, Messung zumindest eines Zustandsparameters des Abteils (40) aufweist, wobei die Abteile (40) vorzugsweise
- zumindest einen Sensor zur Messung der Vibration des Abteils (40) und/oder
- zumindest einen Sensor zur Messung der Temperatur des Abteils (40) und/oder
- zumindest einen Sensor zur Messung der Feuchtigkeit des Abteils (40) und/oder
- Mittel zur Gewichtsmessung jedes in einem Abteil (40) angeordneten Stückgutes (18) und/oder
- Mittel zur Positionsbestimmung jedes in einem Abteil (40) angeordneten Stückgutes (18), aufweisen,
wobei vorzugsweise das Buchungssystem (4) derart eingerichtet ist, dass es dem User, insbesondere über die Schnittstelle, ermöglicht, den oder die gemessenen Zustandsparameter während des Transports live abzufragen,
und/oder
f) jedes Abteil (40) zumindest von einer Seite des Güterwaggons (7) nach dem Öffnen einer jeweiligen Seitenabdeckung des Güterwaggons (7) zugänglich ist.

9. Gütertransportvorrichtung (1) nach einem der Ansprüche 7 bis 8,
**dadurch gekennzeichnet, dass**
der Güterwaggon (7) ein gedeckter Güterwaggon (7) ist, wobei der Güterwaggon (7) vorzugsweise ein Waggonuntergestell (14) und einen darauf aufgesetzten und von diesem abnehmbaren Waggonaufsatz (16) aufweist, wobei der Waggonaufsatz (16) den Laderaum (35) aufweist, wobei vorzugsweise
a) der Waggonaufsatz (16) Mittel zur, insbesondere kontinuierlichen, Überwachung oder Messung konkreter Zustandsparameter des Waggonaufsatzes (16) aufweist, wobei der Waggonaufsatz (16) vorzugsweise zumindest einen Sensor zur Messung der Beschleunigung und/oder zumindest einen Sensor zur Messung der Neigung des Waggonaufsatzes (16) und/oder einen Sensor zur Ortung des Waggonaufsatzes (16) aufweist,
und/oder
b) der Waggonaufsatz (16) eine horizontale Aufsatzlängsrichtung (16a), Auflageelemente (36) zur direkten Auflage auf das Waggonuntergestell (14), vorzugsweise auf Waggonseitenwänden (13) des Waggonuntergestells (14), und vorzugsweise Mittel zur horizontalen Verriegelung des Waggonaufsatzes (16) mit dem Waggonuntergestell (14) aufweist,
und/oder
c) der Waggonaufsatz (16) mit dem Waggonuntergestell (14) in horizontaler und bevorzugt auch in vertikaler Richtung lösbar verriegelt ist.

10. Gütertransportvorrichtung (1) nach Anspruch 9,
**dadurch gekennzeichnet, dass**
der Waggonaufsatz (16) als gedeckter Waggonaufsatz (16) ausgebildet ist und eine Aufsatzbodenwandung (31), zwei Aufsatzseitenabdeckungen (32), zwei Aufsatzstirnwandungen (33) und ein Aufsatzdach (34) aufweist, wobei die Aufsatzbodenwandung (31), die Aufsatzseitenabdeckungen (32), die Aufsatzstirnwandungen (33) und das Aufsatzdach (34) den Laderaum (35) begrenzen, und vorzugsweise der Waggonaufsatz (16) zumindest eine vertikale, zur Waggonlängsrichtung (16a) senkrechte, Zwischenwand (38) und zumindest einen horizontalen Zwischenboden (39a;b) aufweist, welche den Laderaum (35) in die Abteile (40) aufteilen,
wobei vorzugsweise zumindest eine der Aufsatzseitenabdeckungen (32) öffenbar ist, wobei der Waggonaufsatz (16) vorzugsweise eine Aufsatzseitenabdeckungsöffnungseinrichtung aufweist, mit der die Aufsatzseitenabdeckung (32) öffenbar und schließbar in Verbindung steht.

11. Gütertransportvorrichtung (1) nach einem der Ansprüche 9 bis 10,
**dadurch gekennzeichnet, dass**
- das Waggonuntergestell (14) einen Waggonrahmen (19) und zwei Drehgestelle (20) oder zwei Einzelachsen aufweist,
- der Waggonrahmen (19) zwei Waggonkopfstücke (21) und vorzugsweise zwei sich parallel zu einer Waggonlängsrichtung (7a) erstreckende Waggonseitenwände (13) aufweist, welche mit den beiden Waggonkopfstücken (21) verbunden sind,
- vorzugsweise die beiden Waggonseitenwände (13) jeweils um eine zur Waggonlängsrichtung (7a) parallele Seitenwandschwenkachse (25) nach außen ausklappbar sind und mit jedem der beiden Waggonkopfstücke (21) mittels einer Verriegelungseinrichtung in ihrer eingeklappten Stellung lösbar verriegelt sind,
- der Waggonaufsatz (16) mit seinen Auflageelementen (36) auf dem Waggonuntergestell (14), vorzugsweise den Waggonseitenwänden (13), von diesem abhebbar gelagert ist, wobei der Waggonaufsatz (16) vorzugsweise in die Waggonseitenwände (13) eingehängt ist.

12. Gütertransportvorrichtung (1) nach einem der Ansprüche 9 bis 11,
**dadurch gekennzeichnet, dass**
a) eine Güterumschlagvorrichtung (2) jeweils aufweist:
- eine Gleisanlage (5) mit zwei Gleissträngen (5a;5b),
- eine neben dem Gleis (5) und parallel zu dieser angeordnete Verladebahn (8),
- Hubeinrichtungen (17), vorzugsweise ortsfest, zum Anheben und Absenken der Waggonaufsätze (16) von bzw. auf dem jeweiligen Waggonuntergestell (14),
- Zumindest eine Quertransporteinrichtung für den Quertransport der Waggonaufsätze (16) von einem Güterwaggon (7) auf die Verladebahn (8) und umgekehrt mit jeweils zumindest einem, bevorzugt quer zur Gleisanlage (5) verfahrbaren, Quertransportmittel (9),
wobei vorzugsweise die Güterumschlagvorrichtung (2) mehrere, sich in eine Waggonquerrichtung (7b) quer zur Gleisanlage (5) erstreckende, zweckmäßigerweise unterflur in Querrillen (10) der Verladebahn (8) angeordnete, Förderbahnen (11) aufweist, wobei die Quertransportmittel Shuttlebalken (9) sind, die jeweils auf einer der Förderbahnen (11) in Waggonquerrichtung (7b) hin- und her verfahrbar gelagert sind, wobei die Shuttlebalken (9) vorzugsweise jeweils Balkenhubeinrichtungen (15) zum Anheben und Absenken des Waggonaufsatzes (16) aufweisen,
und/oder
b) eine Güterumschlagvorrichtung (2) jeweils Steuermittel, vorzugsweise einen Leitrechner, zur Steuerung des Be- und Entladens der Güterwaggons (7) direkt und/oder der abgeladenen Waggonaufsätze (16) mit einem Be- und Entladegerät (43), aufweist, wobei das Steuermittel mit dem Be- und Entladegerät (43) in Signal übertragender Verbindung steht.

13. Gütertransportvorrichtung (1) nach einem der Ansprüche 7 bis 12,
**dadurch gekennzeichnet, dass**
a) der Güterwaggon (7), vorzugsweise der Waggonaufsatz (16), eine Stromerzeugungseinrichtung, vorzugsweise eine Solarstromanlage, bevorzugt eine Photovoltaikanlage, zur Erzeugung von elektrischer Energie zur Versorgung von elektrischen Bauteilen, des Güterwaggons (7), insbesondere des Waggonaufsatzes (16), aufweist, wobei die Solarstromanlage vorzugsweise Teil des Aufsatzdaches (34) ist,
und/oder
b) der Güterwaggon (7) einen Sensor zur Ortung des Güterwaggons (7) aufweist.

14. Gütertransportverfahren, vorzugsweise unter Verwendung einer Gütertransportvorrichtung (1) gemäß einem der Ansprüche 7 bis 13, zum zumindest teilweisen Schienentransport von eines oder mehrere Stückgüter (18) umfassenden Ladungseinheiten mittels Güterzügen (3), wobei ein Güterzug (3) jeweils zumindest einen, einen Laderaum (35) aufweisenden Güterwaggon (7), aufweist, wobei der Laderaum (35) mehrere voneinander abgeteilte, neben- und übereinander angeordnete, Abteile (40) aufweist, in denen die Ladungseinheiten transportiert werden,
**dadurch gekennzeichnet, dass**
die Ladungseinheiten jeweils in einem Laderaumbereich (44) des Laderaums (35) zusammen mit zumindest einer weiteren, in einem anderen Laderaumbereich (44) angeordneten, Ladungseinheit transportiert werden und für die Zuteilung der Laderaumbereiche (44) ein computergesteuertes Buchungssystem (4) gemäß einem der Ansprüche 1 bis 4 verwendet wird.

15. Gütertransportverfahren nach Anspruch 14,
**dadurch gekennzeichnet, dass**
eine Ladungseinheit jeweils mittels des zumindest einen Güterzuges (3) von einer Start-Güterumschlagvorrichtung (2) zu einer Ziel-Güterumschlagvorrichtung (2) transportiert wird.

16. Gütertransportverfahren nach Anspruch 14 oder 15,
**dadurch gekennzeichnet, dass**
ein Entladen eines Güterzuges (3) mit folgenden Verfahrensschritten erfolgt:
a) Abheben der Waggonaufsätze (16) von den Waggonuntergestellen (14),
b) Transportieren der abgehobenen Waggonaufsätze (16) zur Verladebahn (8) und vorzugsweise Absetzen auf einer Unterlage, insbesondere auf der Verladebahn (8) oder Untersätzen (46),
c) Vorzugsweise automatisiertes, Entladen der Waggonaufsätze (16), insbesondere automatisiertes Entnehmen des Stückgutes (18) aus den Abteilen (40), mittels eines automatisierten Be- und Entladegerätes (43), insbesondere eines Regalbediengerätes,
wobei vorzugsweise das Entladen eines Güterzuges (3) mit folgenden Verfahrensschritten erfolgt:
a) Abheben der Waggonaufsätze (16) von den Waggonuntergestellen (14),
b) Entriegeln und Abklappen der Waggonseitenwände (13) nach außen,
c) Verfahren von zumindest jeweils zwei Quertransporteinrichtungen, insbesondere der Shuttlebalken (9), unter jeweils einen Waggonaufsatz (16),
d) Absetzen der Waggonaufsätze (16) auf den Quertransporteinrichtungen, insbesondere den Shuttlebalken (9),
e) Verfahren der Quertransporteinrichtungen, insbesondere der Shuttlebalken (9) auf die Verladebahn (8),
f) Vorzugsweise Absetzen der Waggonaufsätze (16) auf einer Unterlage, insbesondere der Verladebahn (8) oder den Untersätzen (46),
g) Vorzugsweise automatisiertes Entladen der Waggonaufsätze (16), insbesondere automatisiertes Entnehmen des Stückgutes (18) aus den Abteilen (40), mittels eines automatisierten Be- und Entladegerätes (43), insbesondere eines Regalbediengerätes, wobei vorzugsweise das Be- und Entladegerät (43) mittels eines Steuermittels, bevorzugt eines Leitrechners gesteuert wird.

## Claims

1. Computerized booking system (4),
**characterized in that**
the booking system (4) is configured for booking a loading space area (44) of a loading space (35) of a freight car (7) of a freight train (3) for the transportation of a freight unit comprising one or more piece goods (18) by means of the one freight train (3), wherein the loading space (35) comprises a plurality of compartments (40) which are separated from one another and arranged next to and above one another, and wherein the booking system (4) is configured such that a user can select the desired loading space area (44) himself.

2. Booking system (4) according to claim 1,
**characterized in that**
the loading space (35) is the loading space (35) of a railcar pallet (16) of the freight car (7), which can be removed from and placed on a railcar undercarriage (14) of a freight car (7).

3. Booking system (4) according to claim 1 or 2,
**characterized in that**
a) the booking system (4) is configured for booking the transportation of the freight unit from a starting freight handling device (2) to a destination freight handling device (2) by means of a single freight train (3) or various freight trains (3) and/or by means of a single freight car (7) or various freight cars (7) and/or by means of a single railcar pallet (16) or various railcar pallets (16),
and/or
b) the booking system (4) is configured for booking a first and/or last mile processing.

4. Booking system (4) according to one of the preceding claims,
**characterized in that**
the booking system (4) comprises a database system and an interface, preferably a web portal, for making the booking by a user.

5. Booking system (4) according to one of the preceding claims,
**characterized in that**
the booking system (4) is configured such that the user can select the desired loading space area (44) himself on an interactive interior view of the loading space (35).

6. Booking system (4) according to claim 4 or 5,
**characterized in that**
one or more of the following information is stored in the database system:
- Timetables of the freight trains (3)
- Number and arrangement of the compartments (40) of the freight cars (7) of the freight trains (3)
- Specific information on the individual compartments (40), in particular:
- Suitability of the respective compartment (40) for the transportation of dangerous goods
- Suitability of the respective compartment (40) for the transportation of piece goods with a specific NHM number or specific NHM numbers
- Suitability of the respective compartment (40) for the transportation of sensitive piece goods (18), in particular vibration-sensitive and/or temperature-sensitive and/or moisture-sensitive piece goods (18)
- Maximum loading dimensions of the piece goods (18) to be transported
- Maximum load weight of the piece goods (18) to be transported
- Occupancy of the respective compartments (40) at the time of booking

7. Freight transportation device (1) for rail transportation of piece goods (18), comprising:
a) a plurality of freight trains (3), each having at least one freight car (7) with a loading space (35), wherein the loading space (35) comprises a plurality of compartments (40) which are separated from one another and arranged next to and above one another,
b) a plurality of freight handling devices (2) for loading and unloading the freight trains (3) with or from the piece goods (18), the freight trains (3) running on a rail network between the freight handling devices (2),
**characterized in that**
the freight transportation device (1) comprises a booking system (4) according to one of the preceding claims.

8. Freight transportation device (1) according to claim 7,
**characterized in that**
a) a loading space area (44) in each case consists of one or more compartments (40) or of a compartment area of a compartment (40),
and/or
b) at least some of the compartments (40) of a freight car (7) comprise means for securing the load,
and/or
c) at least some of the compartments (40) comprise means for limiting vibration and shock,
and/or
d) at least some of the compartments (40) comprise means for air conditioning, in particular for adjusting the temperature and/or the humidity, of the compartment (40),
and/or
e) at least some of the compartments (40) comprise means for, in particular continuous, measuring at least one status parameter of the compartment (40), wherein the compartments (40) preferably comprise
- at least one sensor for measuring the vibration of the compartment (40) and/or
- at least one sensor for measuring the temperature of the compartment (40) and/or
- at least one sensor for measuring the humidity of the compartment (40) and/or
- means for measuring the weight of each of the piece goods (18) arranged in a compartment (40) and/or
- means for determining the position of each of the piece goods (18) arranged in a compartment (40),
wherein preferably the booking system (4) is configured such that it enables the user, in particular via the interface, to retrieve the measured status parameter(s) live during transportation,
and/or
f) each compartment (40) is accessible from at least one side of the freight car (7) after opening a respective side cover of the freight car (7).

9. Freight transportation device (1) according to one of the claims 7 to 8,
**characterized in that**
the freight car (7) is a covered freight car (7), wherein the freight car (7) preferably comprises a railcar undercarriage (14) and a railcar pallet (16) mounted thereon and removable therefrom, wherein the railcar pallet (16) comprises the loading space (35), wherein preferably
a) the railcar pallet (16) comprises means for, in particular continuous, monitoring or measuring specific status parameters of the railcar pallet (16), wherein the railcar pallet (16) preferably comprises at least one sensor for measuring the acceleration and/or at least one sensor for measuring the inclination of the railcar pallet (16) and/or a sensor for locating the railcar pallet (16),
and/or
b) the railcar pallet (16) comprises a horizontal pallet longitudinal direction (16a), support elements (36) for direct support on the railcar undercarriage (14), preferably on railcar side walls (13) of the railcar undercarriage (14), and preferably means for horizontal locking of the railcar pallet (16) to the railcar undercarriage (14),
and/or
c) the railcar pallet (16) is releasably locked to the railcar undercarriage (14) in the horizontal and preferably also in the vertical direction.

10. Freight transportation device (1) according to claim 9,
**characterized in that**
the railcar pallet (16) is configured as covered railcar pallet (16) and comprises a pallet bottom wall (31), two pallet side covers (32), two pallet end walls (33) and a pallet roof (34), wherein the pallet bottom wall (31), the pallet side covers (32), the pallet end walls (33) and the pallet roof (34) delimit the loading space (35), and
preferably, the railcar pallet (16) comprises at least one vertical partition wall (38) perpendicular to the pallet longitudinal direction (16a) and at least one horizontal partition floor (39a;b), which divide the loading space (35) into the compartments (40),
wherein preferably at least one of the pallet side covers (32) is openable, wherein the railcar pallet (16) preferably has a pallet side cover opening device, with which the pallet side cover (32) is openably and closably connected.

11. Freight transportation device (1) according to one of the claims 9 to 10,
**characterized in that**
- the railcar undercarriage (14) comprises a railcar frame (19) and two bogies (20) or two individual axles,
- the railcar frame (19) comprises two railcar head pieces (21) and preferably two railcar side walls (13) extending parallel to a railcar longitudinal direction (7a) and connected to the two railcar head pieces (21),
- preferably the two railcar side walls (13) can each be folded outward about a side wall pivot axis (25) parallel to the railcar longitudinal direction (7a) and are releasably locked to each of the two railcar head pieces (21) in their folded-in position by means of a locking device,
- the railcar pallet (16) is mounted with its support elements (36) on the railcar undercarriage (14), preferably the railcar side walls (13), so as to be liftable therefrom, wherein the railcar pallet (16) preferably is suspended in the railcar side walls (13).

12. Freight transportation device (1) according to one of the claims 9 to 11,
**characterized in that**
a) a freight handling device (2) in each case comprises:
- a track system (5) with two track lines (5a;5b),
- a loading track (8) arranged next to the track (5) and parallel to it,
- lifting devices (17), preferably stationary, for raising and lowering the railcar pallets (16) from and onto the respective railcar undercarriage (14),
- at least one transverse transport device for the transverse transportation of the railcar pallets (16) from a freight car (7) to the loading track (8) and vice versa, comprising in each case at least one transverse transport means (9), preferably movable transversely to the track system (5),
wherein preferably the freight handling device (2) comprises a plurality of conveyor tracks (11) extending in a railcar transverse direction (7b) transversely to the track system (5), expediently arranged underfloor in transverse grooves (10) of the loading track (8), wherein the transverse transport means are shuttle beams (9), each of which is mounted on one of the conveyor tracks (11) so as to be movable back and forth in the railcar transverse direction (7b), wherein the shuttle beams (9) preferably each have beam lifting devices (15) for raising and lowering the railcar pallet (16),
and/or
b) a freight handling device (2) in each case comprises control means, preferably a master computer, for controlling the loading and unloading of the freight cars (7) directly and/or of the unloaded railcar pallets (16) with a loading and unloading device (43), wherein the control means is in signal-transmitting connection with the loading and unloading device (43).

13. Freight transportation device (1) according to one of the claims 7 to 12,
**characterized in that**
a) the freight car (7), preferably the railcar pallet (16), comprises a power generation device, preferably a solar power system, preferably a photovoltaic system, for generating electrical energy to power electrical components of the freight car (7), in particular of the railcar pallet (16), wherein the solar power system preferably is part of the pallet roof (34),
and/or
b) the freight car (7) comprises a sensor for locating the freight car (7).

14. Freight transportation method, preferably using a freight transportation device (1) according to one of the claims 7 to 13, for the at least partial rail transport of freight units comprising one or more piece goods (18) by means of freight trains (3), wherein each freight train (3) has at least one freight car (7) with a loading space (35), wherein the loading space (35) comprises a plurality of compartments (40) separated from one another and arranged next to and above one another, in which the freight units are transported,
**characterized in that**
the freight units are each transported in a loading space area (44) of the loading space (35) together with at least one further freight unit arranged in another loading space area (44), and a computerized booking system (4) according to one of the claims 1 to 4 is used for allocating the loading space areas (44).

15. Freight transportation method according to claim 14,
**characterized in that**
a freight unit is in each case transported by means of the at least one freight train (3) from a starting freight handling device (2) to a destination freight handling device (2).

16. Freight transportation method according to claim 14 or 15,
**characterized in that**
unloading a freight train (3) is carried out with the following method steps:
a) lifting the railcar pallets (16) from the railcar undercarriages (14),
b) transporting the lifted railcar pallets (16) to the loading track (8) and preferably placing them on a support, in particular on the loading track (8) or bases (46),
c) preferably automated, unloading of the railcar pallets (16), in particular automated removal of the piece goods (18) from the compartments (40), by means of an automated loading and unloading device (43), in particular a storage handling device,
wherein preferably the unloading of a freight train (3) is carried out with the following method steps:
a) lifting the railcar pallets (16) from the railcar undercarriages (14),
b) unlocking and folding down the railcar side walls (13) to the outside,
c) moving at least two transverse transport devices, in particular the shuttle beams (9), under a respective railcar pallet (16),
d) placing the railcar pallets (16) on the transverse transport devices, in particular the shuttle beams (9),
e) moving the transverse transport devices, in particular the shuttle beams (9), onto the loading track (8),
f) preferably placing the railcar pallets (16) on a support, in particular the loading track (8) or the bases (46),
g) preferably automated, unloading of the railcar pallets (16), in particular automated removal of the piece goods (18) from the compartments (40), by means of an automated loading and unloading device (43), in particular a storage handling device, wherein preferably the loading and unloading device (43) is controlled by a control means, preferably a master computer.

## Revendications

1. Système de réservation commandé par ordinateur (4),
**caractérisé en ce que**
le système de réservation (4) est configuré pour la réservation d'une zone de chargement (44) d'un espace de chargement (35) d'un wagon de marchandises (7) d'un train de marchandises (3) pour le transport d'une unité de chargement comprenant une ou plusieurs marchandises diverses (18) au moyen dudit train de marchandises (3), l'espace de chargement (35) comprenant plusieurs compartiments (40) séparés les uns des autres, disposés les uns à côté des autres et les uns au-dessus des autres, et le système de réservation (4) étant configuré de telle sorte qu'un utilisateur puisse sélectionner lui-même la zone de chargement (44) souhaitée.

2. Système de réservation (4) selon la revendication 1,
**caractérisé en ce que**
l'espace de chargement (35) est l'espace de chargement (35) d'une superstructure de wagon (16) du wagon de marchandises (7), qui peut être retiré d'un châssis de wagon (14) d'un wagon de marchandises (7) et être placé sur celui-ci.

3. Système de réservation (4) selon la revendication 1 ou 2,
**caractérisé en ce que**
a) le système de réservation (4) est configuré pour la réservation du transport de l'unité de chargement d'un dispositif de transbordement de marchandises de départ (2) à un dispositif de transbordement de marchandises de destination (2) au moyen d'un seul train de marchandises (3) ou de différents trains de marchandises (3) et/ou au moyen d'un seul wagon de marchandises (7) ou de différents wagons de marchandises (7) et/ou au moyen d'une seule superstructure de wagons (16) ou de différentes superstructure de wagons (16),
et/ou
b) le système de réservation (4) est configuré pour la réservation d'un traitement de premier et/ou de dernier kilomètre.

4. Système de réservation (4) selon l'une des revendications précédentes,
**caractérisé en ce que**
le système de réservation (4) comprend un système de base de données et une interface, de préférence un portail web, pour l'exécution de la réservation par un utilisateur.

5. Système de réservation (4) selon l'une des revendications précédentes,
**caractérisé en ce que**
le système de réservation (4) est configuré de telle sorte que l'utilisateur peut sélectionner lui-même la zone de chargement (44) souhaitée sur une vue intérieure interactive de l'espace de chargement (35).

6. Système de réservation (4) selon la revendication 4 ou 5,
**caractérisé en ce que**
une ou plusieurs des informations suivantes sont stockées dans le système de base de données :
- Horaires des trains de marchandises (3)
- Nombre et disposition des compartiments (40) des wagons de marchandises (7) des trains de marchandises (3)
- Informations spécifiques concernant les différents compartiments (40), en particulier
- aptitude du compartiment respectif (40) au transport de marchandises dangereuses
- aptitude du compartiment respectif (40) à transporter des marchandises diverses avec un ou des numéros NHM déterminés
- aptitude du compartiment respectif (40) au transport de marchandises diverses (18) fragiles, en particulier de marchandises diverses (18) fragiles sensibles aux vibrations et/ou à la température et/ou à l'humidité
- Dimensions maximales de chargement de la marchandise diverse (18) à transporter
- Poids maximal de la marchandise diverse (18) à transporter
- Taux d'occupation des compartiments respectifs (40) au moment de la réservation

7. Dispositif de transport de marchandises (1) pour le transport sur rail de marchandises diverses (18),
comprenant:
a) plusieurs trains de marchandises (3) comprenant chacun au moins un wagon de marchandises (7) présentant un espace de chargement (35), l'espace de chargement (35) présentant plusieurs compartiments (40) séparés les uns des autres, disposés les uns à côté des autres et les uns au-dessus des autres,
b) une pluralité de dispositifs de transbordement de marchandises (2) pour charger les trains de marchandises (3) avec les marchandises diverses (18) et les décharger de celles-ci, les trains de marchandises (3) circulant sur un réseau ferroviaire entre les dispositifs de transbordement de marchandises (2),
**caractérisé en ce que**
le dispositif de transport de marchandises (1) comprend un système de réservation (4) selon l'une des revendications précédentes.

8. Dispositif de transport de marchandises (1) selon la revendication 7,
**caractérisé en ce que**
a) une zone de chargement (44) se compose respectivement d'un ou de plusieurs compartiments (40) ou d'une zone de compartimentage d'un compartiment (40),
et/ou
b) au moins une partie des compartiments (40) d'un wagon de marchandises (7) présente des moyens de sécurisation du chargement,
et/ou
c) au moins une partie des compartiments (40) comporte des moyens de limitation des vibrations et des secousses,
et/ou
d) au moins une partie des compartiments (40) présente des moyens pour la climatisation, en particulier pour le réglage de la température et/ou de l'humidité de l'air, du compartiment (40),
et/ou
e) au moins une partie des compartiments (40) présente des moyens pour mesurer, en particulier en continu, au moins un paramètre d'état du compartiment (40), les compartiments (40) présentant de préférence
- au moins un capteur pour mesurer la vibration du compartiment (40) et/ou
- au moins un capteur pour mesurer la température du compartiment (40) et/ou
- au moins un capteur pour mesurer l'humidité du compartiment (40) et/ou
- des moyens pour mesurer le poids de chaque marchandise diverse (18) placé dans un compartiment (40) et/ou
- des moyens pour déterminer la position de chaque marchandise diverse (18) disposé dans un compartiment (40),
de préférence, le système de réservation (4) étant configuré de manière à permettre à l'utilisateur, notamment par l'intermédiaire de l'interface, d'interroger en direct le ou les paramètres d'état mesurés pendant le transport,
et/ou
f) chaque compartiment (40) est accessible depuis au moins un côté du wagon de marchandises (7) après l'ouverture d'un couvercle latéral respectif du wagon de marchandises (7).

9. Dispositif de transport de marchandises (1) selon l'une des revendications 7 à 8,
**caractérisé en ce que**
le wagon de marchandises (7) est un wagon de marchandises couvert (7), le wagon de marchandises (7) présentant de préférence un châssis de wagon (14) et une superstructure de wagon (16) posée sur celui-ci et pouvant être enlevée de celui-ci, la superstructure de wagon (16) présentant l'espace de chargement (35), de préférence
a) la superstructure de wagon (16) présente des moyens de surveillance ou de mesure, en particulier en continu, de paramètres d'état concrets de la superstructure de wagon (16), la superstructure de wagon (16) présentant de préférence au moins un capteur pour mesurer l'accélération et/ou au moins un capteur pour mesurer l'inclinaison de la superstructure de wagon (16) et/ou un capteur pour localiser la superstructure de wagon (16),
et/ou
b) la superstructure de wagon (16) présente une direction longitudinale de superstructure horizontale (16a), des éléments d'appui (36) pour l'appui direct sur le châssis de wagon (14), de préférence sur des parois latérales de wagon (13) du châssis de wagon (14), et de préférence des moyens pour le verrouillage horizontal de la superstructure de wagon (16) avec le châssis de wagon (14),
et/ou
c) la superstructure de wagon (16) est verrouillée de manière amovible avec le châssis de wagon (14) dans la direction horizontale et de préférence également dans la direction verticale.

10. Dispositif de transport de marchandises (1) selon la revendication 9,
**caractérisé en ce que**
la superstructure de wagon (16) est conçue comme une superstructure de wagon couverte (16) et présente une paroi de plancher de superstructure (31), deux recouvrements latéraux de superstructure (32), deux parois frontales de superstructure (33) et un toit de superstructure (34), la paroi de plancher de superstructure (31), les recouvrements latéraux de superstructure (32), les parois frontales de superstructure (33) et le toit de superstructure (34) délimitant l'espace de chargement (35), et
de préférence, la superstructure de wagon (16) présente au moins une paroi intermédiaire (38) verticale, perpendiculaire à la direction longitudinale du wagon (16a), et au moins un plancher intermédiaire (39a;b) horizontal, qui divisent l'espace de chargement (35) en les compartiments (40),
dans lequel, de préférence, au moins l'un des couvercles latéraux de superstructure (32) peut être ouvert, la superstructure de wagon (16) présentant de préférence un dispositif d'ouverture de couvercle latéral de superstructure avec lequel le couvercle latéral de superstructure (32) est en liaison de manière à pouvoir être ouvert et fermé.

11. Dispositif de transport de marchandises (1) selon l'une des revendications 9 à 10,
**caractérisé en ce que**
- le châssis de wagon (14) présente un cadre de wagon (19) et deux bogies (20) ou deux essieux individuels,
- le cadre de wagon (19) présente deux pièces de tête de wagon (21) et, de préférence, deux parois latérales de wagon (13) s'étendant parallèlement à une direction longitudinale de wagon (7a), qui sont reliées aux deux pièces de tête de wagon (21),
- de préférence, les deux parois latérales (13) du wagon peuvent être dépliées vers l'extérieur respectivement autour d'un axe de pivotement (25) des parois latérales parallèle à la direction longitudinale (7a) du wagon et sont verrouillées de manière amovible dans leur position repliée avec chacune des deux pièces de tête (21) du wagon au moyen d'un dispositif de verrouillage,
- la superstructure de wagon (16) est montée avec ses éléments d'appui (36) sur le châssis de wagon (14), de préférence sur les parois latérales de wagon (13), de manière à pouvoir être soulevée de celui-ci, la superstructure de wagon (16) étant de préférence accrochée dans les parois latérales de wagon (13).

12. Dispositif de transport de marchandises (1) selon l'une des revendications 9 à 11,
**caractérisé en ce que**
a) un dispositif de transbordement de marchandises (2) comprend respectivement:
- une installation de voies (5) comprenant deux files de voies (5a;5b),
- une voie de chargement (8) disposée à côté de la voie (5) et parallèlement à celle-ci,
- des dispositifs de levage (17), de préférence fixes, pour soulever et abaisser les superstructures de wagons (16) de ou sur le châssis de wagon (14) correspondant,
- au moins un dispositif de transport transversal pour le transport transversal des superstructures de wagons (16) d'un wagon de marchandises (7) sur la voie de chargement (8) et inversement, avec respectivement au moins un moyen de transport transversal (9), de préférence déplaçable transversalement à l'installation de voies (5),
de préférence le dispositif de transbordement de marchandises (2) présentant plusieurs voies de transport (11) s'étendant dans une direction transversale (7b) des wagons, transversalement à l'installation de voies (5), disposées de manière appropriée sous le plancher dans des rainures transversales (10) de la voie de chargement (8), les moyens de transport transversaux étant des poutres navettes (9) qui sont montées chacune sur l'une des voies de transport (11) de manière à pouvoir être déplacées en va-et-vient dans la direction transversale (7b) des wagons, les poutres navettes (9) présentant de préférence chacune des dispositifs de levage de poutres (15) pour soulever et abaisser la superstructure de wagon (16),
et/ou
b) un dispositif de transbordement de marchandises (2) présente respectivement des moyens de commande, de préférence un ordinateur pilote, pour la commande du chargement et du déchargement des wagons de marchandises (7) directement et/ou des superstructures de wagons (16) déchargés avec un appareil de chargement et de déchargement (43), le moyen de commande étant en liaison de transmission de signaux avec l'appareil de chargement et de déchargement (43).

13. Dispositif de transport de marchandises (1) selon l'une des revendications 7 à 12,
**caractérisé en ce que**
a) le wagon de marchandises (7), de préférence la superstructure de wagon (16), présente un dispositif de production de courant, de préférence une installation de courant solaire, de préférence une installation photovoltaïque, pour la production d'énergie électrique pour l'alimentation de composants électriques du wagon de marchandises (7), en particulier de la superstructure de wagon (16), l'installation de courant solaire faisant de préférence partie du toit de la superstructure (34),
et/ou
b) le wagon de marchandises (7) présente un capteur pour la localisation du wagon de marchandises (7).

14. Procédé de transport de marchandises, de préférence en utilisant un dispositif de transport de marchandises (1) selon l'une des revendications 7 à 13 , pour le transport ferroviaire au moins partiel d'unités de chargement comprenant une ou plusieurs marchandises diverses (18) au moyen de trains de marchandises (3), un train de marchandises (3) présentant respectivement au moins un wagon de marchandises (7) présentant un espace de chargement (35), l'espace de chargement (35) présentant plusieurs compartiments (40) séparés les uns des autres, disposés les uns à côté des autres et les uns au-dessus des autres, dans lesquels les unités de chargement sont transportées,
**caractérisé en ce que**
les unités de chargement sont transportées chacune dans une zone de chargement (44) de l'espace de chargement (35) en même temps qu'au moins une autre unité de chargement disposée dans une autre zone de chargement (44) et, pour l'attribution des zones de chargement (44), on utilise un système de réservation (4) commandé par ordinateur selon l'une des revendications 1 à 4.

15. Procédé de transport de marchandises selon la revendication 14,
**caractérisé en ce que**
une unité de chargement est respectivement transportée au moyen dudit au moins un train de marchandises (3) d'un dispositif de transbordement de marchandises de départ (2) à un dispositif de transbordement de marchandises de destination (2).

16. Procédé de transport de marchandises selon la revendication 14 ou 15,
**caractérisé en ce que**
un déchargement d'un train de marchandises (3) est effectué avec les étapes de procédé suivantes:
a) Soulever les superstructures de wagons (16) des châssis de wagons (14),
b) transporter les superstructures de wagons (16) soulevées vers la voie de chargement (8) et les déposer de préférence sur un support, en particulier sur la voie de chargement (8) ou sur des rehausses (46),
c) Déchargement, de préférence automatisé, des superstructures de wagons (16), en particulier prélèvement automatisé des marchandises diverses (18) dans les compartiments (40), au moyen d'un appareil de chargement et de déchargement automatisé (43), en particulier d'un appareil de desserte des rayonnages,
le déchargement d'un train de marchandises (3) s'effectuant de préférence avec les étapes de procédé suivantes:
a) Soulever les superstructures de wagons (16) des châssis de wagons (14),
b) Déverrouillage et rabattement des parois latérales du wagon (13) vers l'extérieur,
c) déplacement d'au moins respectivement deux dispositifs de transport transversaux, en particulier des poutres navettes (9), sous respectivement une superstructure de wagon (16),
d) déposer les superstructures de wagons (16) sur les dispositifs de transport transversaux, en particulier les poutres navettes (9),
e) déplacement des dispositifs de transport transversaux, en particulier des poutres navettes (9) sur la voie de chargement (8),
f) De préférence, déposer les superstructures de wagons (16) sur un support, notamment la voie de chargement (8) ou les rehausses (46),
g) Déchargement, de préférence automatisé, des superstructures de wagons (16), en particulier prélèvement automatisé des marchandises diverses (18) des compartiments (40), au moyen d'un appareil de chargement et de déchargement automatisé (43), en particulier d'un appareil de desserte des rayonnages, l'appareil de chargement et de déchargement (43) étant de préférence commandé au moyen d'un moyen de commande, de préférence un ordinateur pilote.
